# EUROPÄISCHE PATENTSCHRIFT

(11) **EP 0 485 821 B1**
(45) Veröffentlichungstag und Bekanntmachung des Hinweises auf die Patenterteilung: **12.06.1996**
(21) Anmeldenummer: 91118680.7
(22) Anmeldetag: 01.11.1991
(51) Int. Cl.: C07F 17/00, C08F 4/602

(54) **Metallocene mit Liganden aus 2-substituierten Indenylderivaten, Verfahren zu ihrer Herstellung und ihre Verwendung als Katalysatoren**
Metallocenes with 2-substituted indenyl-derivates as ligands, process for their preparation and their use as catalysts
Metallocènes contenant des dérivés d'indényle substitués en position 2 comme ligands, procédé de préparation et application comme catalyseurs.

(30) Priorität: 12.11.1990 DE 4035884
(43) Veröffentlichungstag der Anmeldung: 20.05.1992
(73) Patentinhaber: HOECHST AKTIENGESELLSCHAFT, D-65926 Frankfurt am Main (DE)
(72) Erfinder: Winter, Andreas, Dr., W-6246 Glashütten (DE); Antberg, Martin, Dr., W-6238 Hofheim am Taunus (DE); Spaleck, Walter, Dr., W-6237 Liederbach (DE); Rohrmann, Jürgen, Dr., W-6233 Kelkheim (Taunus) (DE); Dolle, Volker, Dr., W-6233 Kelkheim (Taunus) (DE)

(56) Entgegenhaltungen:
- EP-A- 0 344 887

## Beschreibung

Die vorliegende Erfindung betrifft neue Metallocene mit Liganden aus 2-substituierten Indenylderivaten, die sehr vorteilhaft als Katalysatoren bei der Herstellung von Polyolefinen mit hohem Schmelzpunkt (hoher Isotaktizität) verwendet werden können.

Polyolefine mit höherem Schmelzpunkt und somit höherer Kristallinität und größerer Härte besitzen insbesondere Bedeutung als Konstruktionswerkstoffe (z.B. Großhohlkörper, Rohre, Formteile).

Chirale Metallocene sind in Kombination mit Aluminoxanen aktive, stereospezifische Katalysatoren zur Herstellung von Polyolefinen (US 4,769,510). Unter diesen Metallocenen befinden sich auch substituierte Indenverbindungen. So ist z.B. die Verwendung des Katalysatorsystems Ethylen-bis(4,5,6,7-tetrahydro-1-indenyl)zirkondichlorid/Aluminoxan zur Herstellung von isotaktischem Polypropylen bekannt; vgl. EP-A 185 918). Sowohl dieses als auch zahlreiche andere zum Stand der Technik zählende Polymerisationsverfahren besitzen insbesondere den Nachteil, daß bei technisch interessanten Polymerisationstemperaturen nur Polymere mit relativ niedrigen Schmelzpunkten erhalten werden. Deren Kristallinität und somit ihre Härte sind für einen Einsatz als Konstruktionswerkstoff noch zu gering.

Überraschenderweise wurde nun gefunden, daß Metallocene, die als Liganden bestimmte in 2-Stellung substituierte Indenylderivate haben, geeignete Katalysatoren zur Herstellung von Polyolefinen mit hoher Isotaktizität (Schmelzpunkt) und enger Molmassenverteilung sind.

Gegenstand der vorliegenden Erfindung sind daher die Verbindungen der nachstehenden Formel I 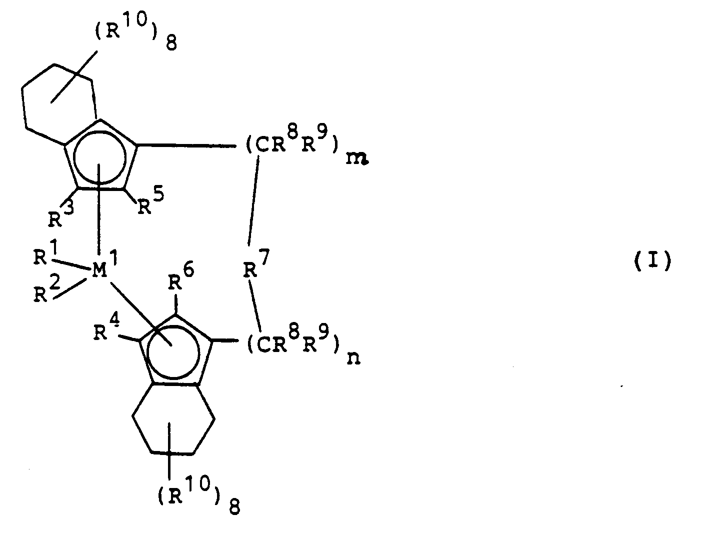
worin
- M¹: ein Metall der Gruppe IVb, Vb oder VIb des Periodensystems ist,
- R¹ und R²: gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
- R³ und R⁴: gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁵, -SR¹⁵, -OSiR₃¹⁵, SiR₃¹⁵ oder -PR₂¹⁵-Rest bedeuten, worin R¹⁵ ein Halogenatom, eine C₁-C₁₀-Alkylgruppe oder eine C₆-C₁₀-Arylgruppe ist,
- R⁵ und R⁶: gleich oder verschieden sind und die für R³ und R⁴ genannte Bedeutung haben, mit der Maßgabe, daß R⁵ und R⁶ nicht Wasserstoff sind,
- R⁷: 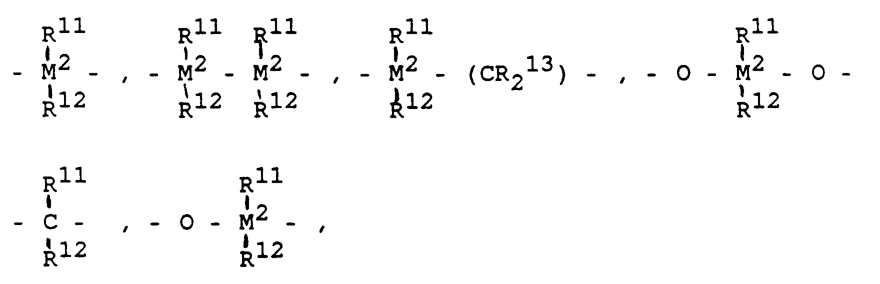 =BR¹¹, =AlR¹¹, -Ge-, -Sn-, -O-, -S-, =SO, =SO₂, =NR¹¹, =CO, =PR¹¹ oder =P(O)R¹¹ ist,
wobei
- R¹¹, R¹² und R¹³: gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
- M²: Silizium, Germanium oder Zinn ist,
- R⁸ und R⁹: gleich oder verschieden sind und die für R¹¹ genannte Bedeutung haben,
m und n gleich oder verschieden sind und null, 1 oder 2 sind, wobei m plus n null, 1 oder 2 ist, und
die Reste R¹⁰ gleich oder verschieden sind und die für R¹¹, R¹² und R¹³ genannte Bedeutung haben.

Alkyl steht für geradkettiges oder verzweigtes Alkyl. Halogen (halogeniert) bedeutet Fluor, Chlor, Brom oder Jod, bevorzugt Fluor oder Chlor.

In Formel I ist M¹ ein Metall der Gruppe IVb, Vb oder VIb des Periodensystems, beispielsweise Titan, Zirkon, Hafnium, Vanadium, Niob, Tantal, Chrom, Molybdän, Wolfram, vorzugsweise Zirkon, Hafnium und Titan.

R¹ und R² sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R³ und R⁴ sind gleich oder verschieden und bedeuten ein Wasserstoffatom, ein Halogenatom, bevorzugt ein Fluor-, Chlor- oder Bromatom, eine C₁-C₁₀-, vorzugsweise C₁-C₄-Alkylgruppe, die halogeniert sein kann, eine C₆-C₁₀-, vorzugsweise C₆-C₈-Arylgruppe, einen -NR₂¹⁵, -SR¹⁵, -OSiR₃¹⁵, -SiR₃¹⁵, oder -PR₂¹⁵-Rest, worin R¹⁵ ein Halogenatom, vorzugsweise Chloratom, oder eine C₁-C₁₀-, vorzugsweise C₁-C₃-Alkylgruppe oder C₆-C₁₀-, vorzugsweise C₆-C₈-Arylgruppe ist. Besonders bevorzugt sind R³ und R⁴ Wasserstoff.

R⁵ und R⁶ sind gleich oder verschieden, bevorzugt gleich, und haben die für R³ und R⁴ beschriebene Bedeutung, mit der Maßgabe, daß R⁵ und R⁶ nicht Wasserstoff sein dürfen. Bevorzugt sind R⁵ und R⁶ (C₁-C₄)-Alkyl, das halogeniert sein kann, wie Methyl, Ethyl, Propyl, Isopropyl, Butyl, Isobutyl oder Trifluormethyl, insbesondere Methyl.

R⁷ ist 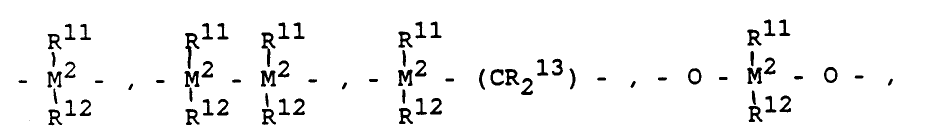 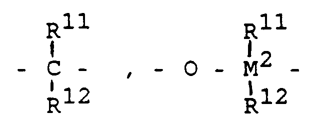
=BR¹¹, =AlR¹¹, -Ge-, -Sn-, -O-, -S-, =SO, =SO₂, =NR¹¹, =CO, =PR¹¹ oder =P(O)R¹¹, wobei R¹¹, R¹² und R¹³ gleich oder verschieden sind und ein Wasserstoffatom, ein Halogenatom, eine C₁-C₁₀-, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-, vorzugsweise C₆-C₈-Arylgruppe, eine C₆-C₁₀-Fluorarylgruppe, vorzugsweise Pentafluorphenylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹¹ und R¹² oder R¹¹ und R¹³ bilden jeweils zusammen mit den sie verbindenden Atomen einen Ring.

M² ist Silizium, Germanium oder Zinn, bevorzugt Silizium und Germanium.

R⁷ ist vorzugsweise =CR¹¹R¹², =SiR¹¹R¹², =GeR¹¹R¹², -O-, -S-, =SO, =PR¹¹ oder =P(O)R¹¹.

R⁸ und R⁹ sind gleich oder verschieden und haben die für R¹¹ genannte Bedeutung.

m und n sind gleich oder verschieden und bedeuten null, 1 oder 2, bevorzugt null oder 1, wobei m plus n null, 1 oder 2, bevorzugt null oder 1 ist.

Die Reste R¹⁰ sind gleich oder verschieden und haben die für R¹¹, R¹² und R¹³ genannte Bedeutung. Bevorzugt sind die Reste R¹⁰ Wasserstoffatome oder eine C₁-C₁₀-, vorzugsweise C₁-C₄-Alkylgruppe.

Somit sind die besonders bevorzugten Metallocene solche, bei denen in Formel I M¹ Zr oder Hf, R¹ und R² gleich oder verschieden sind und Methyl oder Chlor, R³ und R⁴ Wasserstoff, R⁵ und R⁶ gleich oder verschieden sind und Methyl, Ethyl oder Trifluormethyl, R⁷ einen Rest 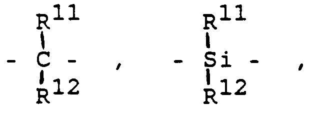
n plus m null oder 1 und R¹⁰ Wasserstoff bedeuten; insbesondere die in den Ausführungsbeispielen aufgeführten Verbindungen I.

Unter den in den Ausführungsbeispielen genannten Metallocenen I besitzen rac-Dimethylsilyl(2-methyl-4,5,6,7-tetrahydro-1-indenyl)₂-zirkondichlorid, rac-Ethylen(2-methyl-4,5,6,7-tetrahydro-1-indenyl)₂-zirkondichlorid, rac-Dimethylsilyl(2-methyl-4,5,6,7-tetrahydro-1-indenyl)₂-zirkondimethyl und rac-Ethylen(2-methyl-4,5,6,7-tetrahydro-1-indenyl)₂-zirkondimethyl besondere Bedeutung.

Die chiralen Metallocene werden als Racemat zur Herstellung von hochisotaktischen Poly-1-olefinen eingesetzt. Verwendet werden kann aber auch die reine R- oder S-Form. Mit diesen reinen stereoisomeren Formen ist optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochisotaktisches Polymeres erzeugen kann.

Die Trennung der Stereoisomeren ist im Prinzip bekannt.

Gegenstand der vorliegenden Erfindung ist ferner ein Verfahren zur Herstellung der Metallocene I, dadurch gekennzeichnet, daß man
a) eine Verbindung der Formel II 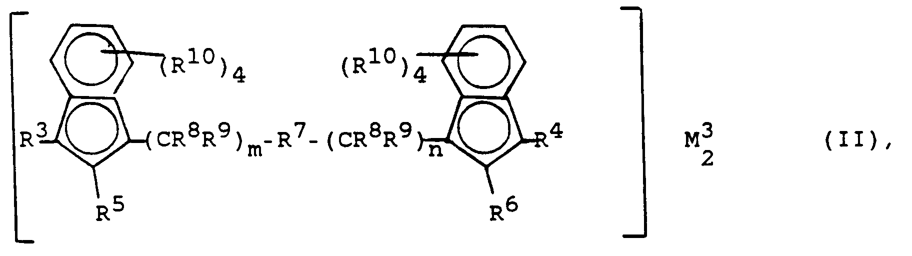 wobei R³-R¹⁰, m und n die in Formel I beschriebene Bedeutung haben und M³ ein Alkalimetall, bevorzugt Lithium, bedeutet, mit einer Verbindung der Formel III

   M¹X₄ (III),

   worin M¹ die in Formel I genannte Bedeutung besitzt und X ein Halogenatom, bevorzugt Chlor, bedeutet, umsetzt und das Reaktionsprodukt katalytisch hydriert oder
b) eine Verbindung der Formel IIa 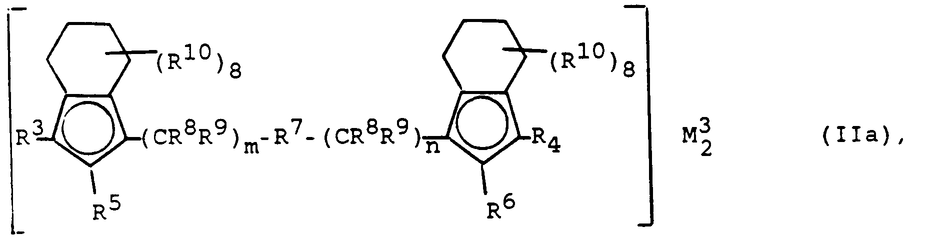 mit einer Verbindung der Formel III

   M¹X₄ (III),

   wobei alle Substituenten die unter a) genannten Bedeutungen besitzen, umsetzt und das unter a) und b) erhaltene Reaktionsprodukt gegebenenfalls derivatisiert.

Die Synthese wird unter Schutzgas und in wasserfreien Lösemitteln durchgeführt. Zu einer Suspension der Verbindung der Formel III in einem Lösemittel wie Toluol, n-Hexan, Dichlormethan, Ether, THF, n-Pentan, Benzol, vorzugsweise Dichlormethan oder Toluol, wird das getrocknete Salz der Formel II/IIa zugegeben. Die Reaktionstemperatur beträgt -78°C bis 30°C, vorzugsweise -40°C bis 10°C. Die Reaktionsdauer beträgt 0,25 bis 24 h, vorzugsweise 1 bis 4 h.

Eine weitere Ausgestaltung des erfindungsgemäßen Verfahrens besteht darin, daß man anstelle der Verbindung III M¹X₄ eine Verbindung der Formel IIIa M¹X₄L₂ benutzt. Dabei steht L für einen Donorliganden. Geeignete Donorliganden sind beispielsweise Tetrahydrofuran, Diethylether, Dimethylether u.a., vorzugsweise Tetrahydrofuran (THF).

In diesem Fall wird zu einer Lösung oder einer Suspension einer Verbindung der Formel IIIa in einem Lösemittel wie Toluol, Xylol, Ether oder THF, vorzugsweise THF, eine Lösung des Salzes der Formel II/IIa, in einem der obengenannten Lösemittel zugegeben. Es kann aber auch so vorgegangen werden, daß beide Komponenten simultan zu einem Lösemittel getropft werden. Dies wird bevorzugt durchgeführt. Die Reaktionstemperatur beträgt -40°C bis 100°C, vorzugsweise 0°C bis 50°C, insbesondere 10°C bis 35°C. Die Reaktionsdauer beträgt 0,25 h bis 48 h, vorzugsweise 1 h bis 24 h, insbesondere 2 h bis 9 h.

Die Hydrierung wird in trockenen, wasserfreien Lösemittel wie H₂CCl₂ oder Glyme durchgeführt. Die Reaktionstemperatur beträgt 20 bis 70°C, vorzugsweise Umgebungstemperatur bis 50°C, der Druck beträgt 5 bis 200 bar, vorzugsweise 20 bis 120 bar, insbesondere 35 bis 100 bar, die Reaktionsdauer beträgt 0,25 bis 24 h, bevorzugt 0,5 bis 18 h, insbesondere 1 bis 12 h. Als Hydriergefäß können Stahlautoklaven verwendet werden. Als Hydrierkatalysator werden Platin, Platinoxid, Palladium oder andere übliche Übergangsmetallkatalysatoren verwendet.

Die so erhaltenen Halogenderivate können nach bekannten Standardverfahren in die Alkyl-, Aryl- oder Alkenylkomplexe umgewandelt werden.

Die Synthese der Verbindungen der Formeln II und IIa erfolgt durch Deprotonierung. Diese Reaktion ist bekannt; vgl. J. Am. Chem. Soc., 112 (1990) 2030-2031, ibid. 110 (1988) 6255-6256, ibid. 109 (1987), 6544-6545, J. Organomet. Chem., 322 (1987) 65-70, New. J. Chem. 14 (1990) 499-503 und die Ausführungsbeispiele.

Auch die Synthese der protonierten Formen von den Verbindungen dieser Formeln ist beschrieben, mit der Abweichung, daß sie in α- und β-Position nicht entsprechend substituiert sind (Bull. Soc. Chim., 1967, 2954). Die zu ihrer Synthese benötigten Brückenbausteine sind in der Regel bei kommerziellen Anbieten erhältlich, die benötigten Indenyl-Verbindungen dagegen nicht. Einige Synthesevorschriften beinhaltende Literaturzitate seien angegeben, die Vorgehensweise für nicht angeführte Indenderivate ist analog: J. Org. Chem., 49 (1984) 4226-4237, J. Chem. Soc., Perkin II, 1981, 403-408, J. Am. Chem. Soc., 106 (1984) 6702, J. Am. Chem. Soc., 65 (1943) 567, J. Med. Chem., 30 (1987) 1303-1308, Chem. Ber. 85 (1952) 78-85 und die Ausführungsbeispiele.

Die Metallocene I können somit prinzipiell nach folgendem Reaktionsschema hergestellt werden: 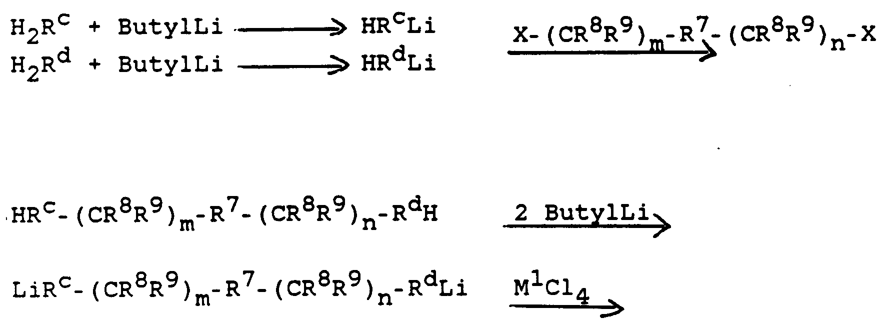 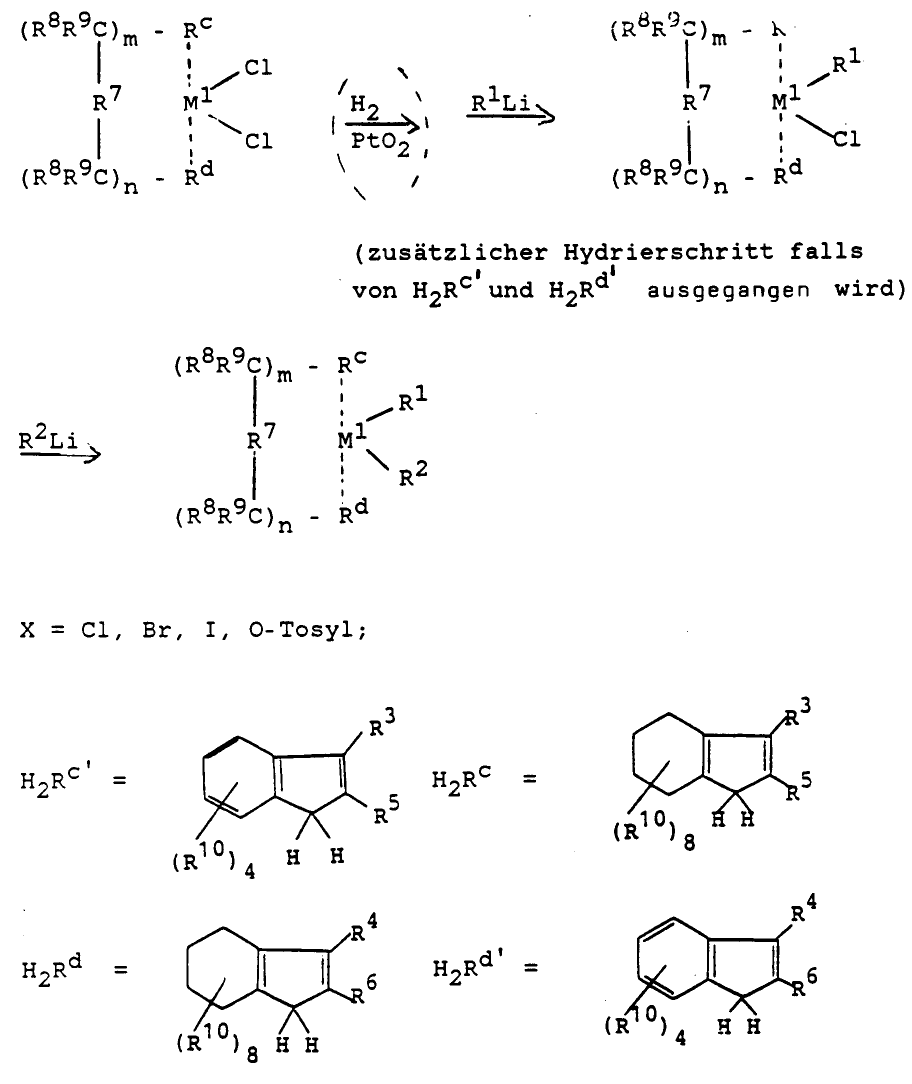
Erfindungsgemäß wird als Cokatalysator bei der Olefinpolymerisation ein Aluminoxan der Formel (IV) 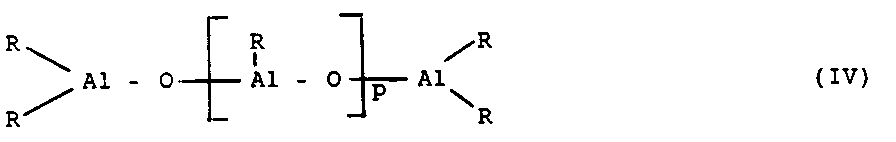
für den linearen Typ und/oder der Formel (V) 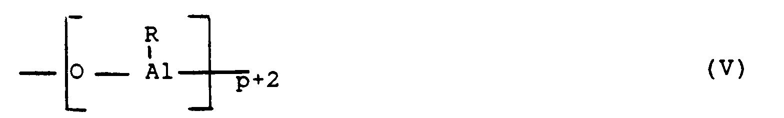
für den cyclischen Typ verwendet, wobei in den Formeln (IV) und (V) die Reste R gleich oder verschieden sein können und eine C₁-C₆-Alkylgruppe, eine C₆-C₁₈-Arylgruppe oder Wasserstoff bedeuten, und p eine ganze Zahl von 2 bis 50, bevorzugt 10 bis 35 bedeutet.

Bevorzugt sind die Reste R gleich und bedeuten Methyl, Isobutyl, Phenyl oder Benzyl, besonders bevorzugt Methyl.

Sind die Reste R unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R werden entsprechend der gewünschten Zusammensetzung zwei verschiedene Aluminiumtrialkyle (AlR₃ + AlR'₃) mit Wasser umgesetzt (vgl. S. Pasynkiewicz, Polyhedron 9 (1990) 429 und EP-A 302 424).

Die genaue Struktur der Aluminoxane IV und V ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen I vor dem Einsatz in der Polymerisationsreaktion mit einem Aluminoxan der Formel (IV) und/oder (V) vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70 °C.

Das Metallocen kann auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des Verfahrens besteht darin, daß man an Stelle oder neben eines Aluminoxans eine salzartige Verbindung der Formel RₓNH₄₋ₓBR'₄ oder der Formel R₃PHBR'₄ als Cokatalysator verwendet. Dabei sind x = 1,2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (vgl. EP-A 277 004).

Die Polymerisation oder Copolymerisation wird in bekannter Weise in Lösung, in Suspension oder in der Gasphase, kontinuierlich oder diskontinuierlich, ein- oder mehrstufig bei einer Temperatur von 0 bis 150 °C, vorzugsweise 30 bis 80 °C, durchgeführt. Polymerisiert oder copolymerisiert werden Olefine der Formel R^{a}-CH=CH-R^{b}. In dieser Formel sind R^{a} und R^{b} gleich oder verschieden und bedeuten ein Wasserstoffatom oder einen Alkylrest mit 1 bis 14 C-Atomen.

R^{a} und R^{b} können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbornadien. Insbesondere wird Propylen und Ethylen polymerisiert.

Als Molmassenregler wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird das Metallocen in einer Konzentration, bezogen auf das Übergangsmetall, von 10⁻³ bis 10⁻⁸, vorzugweise 10⁻⁴ bis 10⁻⁷ mol Übergangsmetall pro dm³ Lösemittel bzw. pro dm³ Reaktorvolumen angewendet. Das Aluminoxan wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan, genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das Verfahren zeichnet sich dadurch aus, daß die erfindungsgemäßen Metallocene im technisch interessanten Temperaturbereich zwischen 30 und 80 °C Polymere mit hoher Molmasse, hoher Stereospezifität, enger Molmassendispersität und insbesondere einem hohen Schmelzpunkt, gleichbedeutend mit hoher Kristallinität und hoher Härte, erzeugen.

Die nachfolgenden Beispiele sollen die Erfindung näher erläutern.

Es bedeuten:
- VZ =: Viskositätszahl in cm³/g

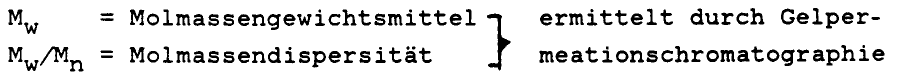

- II =: Isotaktischer Index (II = mm+1/2 mr) ermittelt durch ¹³C-NMR-Spektroskopie
- nᵢₛₒ =: Länge der isotaktischen Blöcke (in Propyleneinheiten) (nᵢₛₒ = 1+ 2 mm/mr) ermittelt durch ¹³C-NMR-Spektroskopie
Schmelzpunkte und Schmelzwärmen ΔH_{Schm.} wurden mit DSC bestimmt (20 °C/min Aufheiz-/Abkühlgeschwindigkeit).

### Synthese der Ausgangssubstanzen

### I) Synthese von 2-Me-Inden

110,45 g (0,836 mol) 2-Indanon wurden in 500 ml Diethylether gelöst und 290 cm³ 3 n (0,87 mol) etherische Methylgrignardlösung so zugetropft, daß leicht refluxierte. Nach 2 h Kochen unter leichtem Rückfluß wurde auf eine Eis/Salzsäure-Mischung gegeben und mit Ammoniumchlorid ein pH von 2-3 eingestellt. Die organische Phase wurde abgetrennt und mit NaHCO₃ und Kochsalzlösung gewaschen und getrocknet. Es wurden 98 g Rohprodukt (2-Hydroxy-2-methyl-indan) erhalten, welches nicht weiter gereinigt wurde.

In 500 cm³ Toluol wurde dieses Produkt gelöst, mit 3 g p-Toluolsulfonsäure am Wasserabscheider bis zur Beendigung der Wasserabspaltung erhitzt, eingeengt, in Dichlormethan aufgenommen und über Silicagel filtriert und im Vakuum destilliert (80°C/10 mbar).
Ausbeute: 28,49 g (0,22 mol-26 %).

Die Synthese dieser Verbindung ist auch beschrieben in: C.F. Koelsch, P.R. Johnson, J. Am. Chem. Soc., 65 (1943) 567-573

### II) Synthese von (2-Me-Inden)₂SiMe₂

13 g (100 mmol) 2-Me-Inden wurde in 400 cm³ Diethylether gelöst und 62,5 cm³ 1,6 n (100 mmol) n-Butyllithium-n-Hexan-Lösung innerhalb 1 h unter Eiskühlung zugetropft und dann 1 h bei ∼35°C nachgerührt.

6,1 cm³ (50 mmol) Diemthyldichlorsilan wurden in 50 cm³ Et₂O vorgelegt und bei 0°C die Lithiosalzlösung innerhalb von 5 h zugetropft, über Nacht bei Raumtemperatur gerührt und über das Wochenende stehen gelassen.

Von abgesetztem Feststoff wurde abfiltriert und zur Trockne eingedampft. Nach Extraktion mit kleinen Portionen n-Hexan wurde filtriert und eingeengt. Es fielen 5,7 g (18,00 mmol) eines weißen Kristallisats an. Die Mutterlauge wurde eingeengt und dann säulenchromatographisch (n-Hexan/H₂CCl₂ 9:1 vol.) gereinigt, wobei nochmals 2,5 g (7,9 mmol-52 %) Produkt (als Isomerengemisch) anfielen.
r_{F} (SiO₂; n-Hexan/H₂CCl₂ 9:1 vol.) = 0,37
Das 1-H-NMR-Spektrum zeigt die für ein Isomerengemisch zu erwartenden Signale in Verschiebung und Integrationsverhältnis.

### III) Synthese von (2-Me-Ind)₂CH₂CH₂

3 g (23 mmol) 2-Me-Inden wurden in 50 cm³ THF gelöst und 14,4 cm³ 1,6 n (23,04 mmol) n-Butyllithium-n-Hexan-Lösung zugetropft und dann 1 h bei 65°C gerührt. Danach wurde 1 cm³ (11,5 mmol) 1,2-Dibromethan bei -78°C zugegeben, auf Raumtemperatur erwärmen lassen und 5 h gerührt. Nach Eindampfen wurde säulenchromatographisch gereinigt (SiO₂; n-Hexan/H₂CCl₂ 9:1 vol.).

Die produkthaltigen Fraktionen wurden vereinigt, eingedampft und in trockenem Ether aufgenommen, über MgSO₄ getrocknet, filtriert und das Lösemittel abgezogen.

Ausbeute: 1,6 g (5,59 mmol - 49 %) an Isomerengemisch r_{F} (SiO₂; n-Hexan/H₂CCl₂ 9:1 vol.) = 0,46
Das 1-H-NMR-Spektrum entspricht der Erwartung für ein Isomerengemisch in Signalverschiebung und Integration.

### Synthese der Metallocene I

### IV) rac-Dimethylsilyl(2-Me-4,5,6,7-tetrahydro-1-indenyl)₂-zirkondichlorid

### a. Synthese der Vorstufe rac-Dimethylsilyl(2-Me-1-indenyl)₂zirkondichlorid

1,68 (5,31 mmol) des Chelatliganden Dimethylsilyl(2-methylinden)₂ wurden in 50 cm³ THF gegeben und 6,63 cm³ einer 1,6 n (10,61 mmol) n-BuLi-n-Hexan-Lösung zugetropft. Die Zugabe erfolgte bei Umgebungstemperatur innerhalb 0,5 h. Nach 2 stündigem Rühren bei ca. 35°C wurde das Lösemittel im Vakuum abgezogen und der Rückstand mit n-Pentan verrührt, abfiltriert und getrocknet.

Das so erhaltene Dilithiosalz wurde bei -78°C zu einer Suspension von 1,24 g (5,32 mmol) ZrCl₄ in 50 cm³ CH₂Cl₂ gegeben und die Mischung 3 h bei dieser Temperatur gerührt. Nach Erwärmung auf Raumtemperatur über Nacht wurde eingedampft. Das 1-H-NMR-Spektrum zeigte neben dem Vorliegen von etwas ZrCl₄(thf)₂, ein rac-meso-Gemisch. Nach Verrühren mit n-Pentan und Trocknen wurde der feste, gelbe Rückstand in THF suspendiert, abfiltriert und NMR-spektroskopisch untersucht. Diese drei Arbeitsschritte wurden mehrmals wiederholt; schließlich wurden 0,35 g (0,73 mmol-14 %) Produkt erhalten, in dem die rac-Form, nach 1-H-NMR, auf mehr als 17:1 angereichert war.

Die Verbindung zeigte eine korrekte Elementaranalyse und die folgenden NMR-Signale (CDCl₃, 100 MHz) : δ = 1,25 (s, 6H, Si-Me); 2,18 (s, 6H, 2-Me), 6,8 (s, 2H, 3-H-Ind); 6,92-7,75 (m, 8H, 4-7-H-Ind).

### b. Synthese des Endprodukts

0,56 g (1,17 mmol) der Vorstufe rac-Dimethylsilyl(2-Me-1-indenyl)₂zirkondichlorid wurden in 70 cm³ CH₂Cl₂ gelöst und mit 40 mg PtO₂ in einen 200 cm³-NOVA-Rührautoklaven gegeben. Dann wurde 4 h bei Raumtemperatur unter einem H₂-Druck von 40 bar gerührt. Das Filtrat wurde eingedampft, mit Toluol/n-Hexan (1:2 vol.) ausgelaugt, filtriert und eingedampft. Nach Zugabe von n-Pentan wurde die erhaltene Suspension abfiltriert und getrocknet. Die Ausbeute betrug 0,34 g (0,7 mmol-60 %). Das 1-H-NMR-Spektrum (CD₂Cl₂, 100 MHz) zeigte folgende Signale : δ = 0,90 (s, 6H, Me-Si); 1,43-1,93 (m, 8H, Indenyl-H); 2,10 (s, 6H, 2-Me); 2,44-3,37 (m, 8H, Indenyl-H); 6,05 (s, 2H, 3-H-Ind).

### V) Synthese von rac-Ethylen(2-Me-4,5,6,7-tetrahydro-1-indenyl)₂zirkondichlorid

### a. Synthese der Vorstufe rac-Ethylen(2-Me-1-indenyl)₂-zirkondichlorid

Zu 5,07 g (17,7 mmol) Ligand Ethylen(2-methylinden)₂ in 200 cm³ THF wurde bei Raumtemperatur 14,2 cm³ 2,5 n (35,4 mmol) n-BuLi-n-Hexan-Lösung innerhalb 1 h zugetropft und dann 3 h bei ca. 50 °C gerührt. Dabei geht ein zwischenzeitlich gebildeter Niederschlag wieder in Lösung. Über Nacht wurde stehengelassen.

6,68 g (17,7 mmol) ZrCl₄(thf)₂ in 250 cm³ THF wurden simultan mit obiger Dilithiosalzlösung zu ca. 50 cm³ THF bei 50 °C zugetropft und dann 20 h bei dieser Temperatur gerührt. Der Toluolextrakt des Eindampfrückstands wurde eingedampft. Nach Extraktion des Rückstands mit wenig THF wurde aus Toluol umkristallisiert. Dabei wurden 0,44 g (0,99 mmol-5,6 %) Produkt erhalten, wobei die rac-Form besser als 15:1 angereichert war.

Die Verbindung zeigte eine korrekte Elementaranalyse und die folgenden NMR-Signale (CDCl₃, 100 MHz) : δ = 2,08 (2s, 6H, 2-Me); 3,45-4,18 (m, 4H, -CH₂CH₂-), 6,65 (2H, 3-H-Ind); 7,05-7,85 (m, 8H, 4-7-H-Ind).

### b. Synthese des Endproduktes

0,56 g (1,25 mmol) rac-Ethylen(2-Me-1-indenyl)₂zirkondichlorid wurden in 50 cm³ CH₂Cl₂ gelöst und mit 40 mg PtO₂ in einen 200 cm³-NOVA-Rührautoklaven gegeben. Dann wurde 2 h bei Raumtemperatur unter einem H₂-Druck von 40 bar gerührt. Es wurde zur Trockne eingedampft und im Hochvakuum bei ca. 100°C Badtemperatur sublimiert. Dabei fielen 0,46 g (1,01 mmol-81 %) Produkt an. Die Elementaranalyse war korrekt, das 1-H-NMR-Spektrum zeigt folgende Signale : δ = 1,46 - 1,92 (m, 8H, Indenyl-H), 2,14 (s, 6H, 2-Me); 2,49-2,73 (m, 6H, Indenyl-H und -CH₂CH₂-), 2,89-3,49 (m, 6H, Indenyl-H); 6,06 (s, 2H, 3-H-Ind).

### VI) Me₂Zr[(2-Me-4,5,6,7-H₄-Ind)₂CH₂CH₂]

1,27 g (2,79 mmol) Cl₂Zr[(2-Me-4,5,6,7-H₄-Ind)₂CH₂CH₂] in 20 cm³ Et₂O wurden tropfenweise mit 5 cm³ 1,6 n (8 mmol) etherischer Methyllithiumlösung bei -50°C versetzt und dann 1 h bei -10°C gerührt. Nach Austausch des Lösemittels gegen n-Hexan wurde noch 2 h bei Raumtemperatur gerührt, filtriert und eingedampft.
Ausbeute: 1 g (2,40 mmol-86 %); korrekte Elementaranalyse.

### VII) Me₂Zr[(2-Me-4,5,6,7-H₄-Ind)₂SiMe₂]

Zu 1,33 g (2,74 mmol) Cl₂Zr[(2-Me-4,5,6,7-H₄-Ind)₂SiMe₂] in 25 cm³ Et₂O wurden bei -35°C 4,3 cm³ 1,6 n (6,88 mmol) etherische Methyllithiumlösung innerhalb 15 min zugetropft. Nach 1 h Rühren wurde das Lösemittel gegen n-Hexan ausgetauscht und 2 h bei 10°C gerührt, dann filtriert, eingedampft und im Hochvakuum sublimiert.
Ausbeute: 1,02 g (2,49 mmol-89 %); korrekte Elementaranalyse

### VIII) Cl₂Zr[(2-Me-4,5,6,7-H₄-Ind)₂SiMePh]

1,5 g (2,78 mmol) Cl₂Zr[(2-Me-Ind)₂SiMePh] und 60 mg PtO₂ in 80 cm³ H₂CCl₂ wurden in einem Rührautoklaven 5 h bei 40°C unter einem H₂-Druck von 30 bar hydriert. Nach Filtration und Abziehen des Lösemittels wurde im Hochvakuum sublimiert.
Ausbeute: 0,71 g (1,30 mmol-47 %); korrekte Elementaranalyse

### IX) Cl₂Zr[(2-Me-4,5,6,7-H₄-Ind)₂SiPh₂]

0,8 g (1,33 mmol) Cl₂Zr[(2-Me-Ind)₂SiPh₂] in 50 cm³ H₂CCl₂ gelöst wurden mit 30 mg Pt unter einem H₂-Druck von 50 bar bei 40°C 3 h gerührt. Nach Filtration wurde eingedampft und mit n-Hexan in der Wärme ausgelaugt, filtriert und eingedampft.
Ausbeute: 0,36 g (0,59 mmol-44 %); korrekte Elementaranalyse

### X) Cl₂Zr[(2-Et-4,5,6,7-H₄-Ind)₂CH₂CH₂]

1,09 g (2,30 mmol) Cl₂Zr[(2-Et-Ind)₂CH₂CH₂] in 80 cm³ H₂CCl₂ wurden mit 50 mg PtO₂ 1 h bei Umgebungstemperatur unter 80 bar H₂-Druck hydriert. Nach Filtration wurde eingedampft und im Hochvakuum sublimiert.
Ausbeute: 0,94 g (1,95 mmol-85 %); korrekte Elementaranalyse

### XI) Cl₂Zr[(2-Et-4,5,6,7-H₄-Ind)₂SiMe₂]

2,00 g (3,96 mmol) Cl₂Zr[(2-Et-Ind)₂SiMe₂] in 100 cm³ H₂CCl₂ wurden mit 60 mg PtO₂ 3 h bei 35°C unter einem Druck von 50 bar H₂ hydriert. Nach Filtration wurde eingedampft und aus n-Pentan umkristallisiert.
Ausbeute: 1,41 g (2,75 mmol-69 %); korrekte Elementaranalyse

### XII) Cl₂Zr[(2-Me-4,5,6,7-H₄-Ind)₂CHMeCH₂]

0,80 g (1,73 mmol) Cl₂Zr[(2-Me-Ind)₂CHMeCH₂] in 40 cm³ H₂CCl₂ wurden mit 30 mg PtO₂ 1 h bei Umgebungstemperatur unter 80 bar H₂-Druck gerührt und dann abfiltriert, eingedampft und sublimiert.
Ausbeute: 0,55 g (1,17 mmol-68 %); korrekte Elementaranalyse

### XIII) Cl₂Zr[(2-Me-4,5,6,7-H₄-Ind)₂CMe₂]

0,3 g (0,65 mmol) Cl₂Zr[(2-Me-Ind)₂CMe₂] in 30 cm³ H₂CCl₂ wurden mit 30 mg Pt bei Umgebungstemperatur 1 h unter 70 bar H₂-Druck hydriert. Nach Abziehen des Lösemittels wurde im Hochvakuuum sublimiert.
Ausbeute: 0,21 g (0,45 mmol-69 %); korrekte Elementaranalyse Abkürzungen:
Me = Methyl, Et = Ethyl, Bu = Butyl, Ph = Phenyl, Ind = Indenyl, THF = Tetrahydrofuran, PP = Polypropylen, PE = Polyethylen.

### Metallocene I als Katalysatoren für die Olefinpolymerisation

### Beispiel 1

Ein trockener 24 dm³-Reaktor wurde mit Stickstoff gespült und mit 12 dm³ flüssigem Propylen befüllt.

Dann wurden 35 cm³ toluolische Methylaluminoxanlösung (entsprechend 52 mmol Al, mittlerer Oligomerisierungsgrad n = 17) zugegeben und der Ansatz bei 30 °C 15 Minuten gerührt. Parallel dazu wurden 5,3 mg (0,011 mmol) rac-Dimethylsilyl(2-Me-4,5,6,7-tetrahydro-1-indenyl)₂zirkondichlorid in 13,5 cm³ toluolischer Methylaluminoxanlösung (20 mmol Al) gelöst und durch 15 minütiges Stehenlassen voraktiviert. Die Lösung wurde dann in den Reaktor gegeben und das Polymerisationssystem nach Aufheizung (innerhalb von 5 Minuten) auf 70 °C durch Kühlung 3 h bei dieser Temperatur gehalten. Die Aktivität des Metallocens betrug 50,3 kgPP/g Metallocen x h.

VZ = 37 cm³/g; M_{w} = 24 300 g/mol; M_{w}/Mₙ = 2,4;
II = 96,0 %; nᵢₛₒ = 62; Schmp.= 150 °C; ΔH_{Schm.} = 104 J/g.

### Beispiel 2

Beispiel 1 wurde wiederholt, es wurden jedoch 19,5 mg (0,04 mmol) des Metallocens eingesetzt, die Polymerisationstemperatur betrug 50 °C.

Die Aktivität des Metallocens war 18,8 kgPP/g Metallocen x h.

VZ = 72 cm³/g; M_{w} = 64 750 g/mol; M_{w}/Mₙ = 2,1;
II = 96,0 %; nᵢₛₒ = 64; Schmp.= 154 °C; ΔH_{Schm.} = 109,5 J/g.

### Beispiel 3

Beispiel 1 wurde wiederholt, es wurden jedoch 58,0 mg (0,12 mmol) des Metallocens verwendet, die Polymerisationstemperatur betrug 30 °C.
Die Aktivität des Metallocens war 9,7 kgPP/g Metallocen x h.

VZ = 152 cm³/g; M_{w} = 171 000 g/mol; M_{w}/Mₙ = 2,2;
II = 99,9 %; nᵢₛₒ = > 500; Schmp.= 160 °C; ΔH_{Schm.} = 103 J/g.

### Beispiele 4 - 6 und Vergleichsbeispiele A - E

Die Beispiele 1 bis 3 wurden wiederholt, verwendet wurden jedoch die Metallocene Dimethylsilyl(2-Me-1-indenyl)₂zirkondichlorid (Metallocen 1), Dimethylsilyl(4,5,6,7-tetrahydro-1-indenyl)₂zirkondichlorid (Metallocen 2) und Dimethylsilyl(1-indenyl)₂zirkondichlorid (Metallocen 3)

| (Vergl.)-Beisp. | Metallocen | Polym.temp. [°C] | nᵢₛₒ | Schmp. [°C] | ΔH_{Schm.} [J/g] |
|---|---|---|---|---|---|
| 4 | 1 | 70 | 38 | 145 | 86,6 |
| 5 | 1 | 50 | 48 | 148 | 88,1 |
| 6 | 1 | 30 | 48 | 152 | 90,2 |
| A | 2 | 70 | 34 | 141 | - |
| B | 2 | 50 | 38 | 143 | - |
| C | 3 | 70 | 32 | 140 | - |
| D | 3 | 50 | 34 | 142 | - |
| E | 3 | 30 | 37 | 145 | - |

Der Vergleich der Vergleichsbeispiele C/D mit A/B belegt den positiven Einfluß des 4,5,6,7-Tetrahydroindenylliganden gegenüber Indenyl, die Vergleichsbeispiele C/D/E verglichen mit 4/5/6 zeigen den positiven Effekt der Substitution in 2-Position des Indenylliganden.

Verglichen mit den Beispielen 1 bis 3 führt jedoch nur die Kombination von Substitution in 2-Position verbunden mit dem Tetrahydroindenylsystem zu sehr hohen Schmelzpunkten und Schmelzwärmen und somit zu hoher Kristallinität und Härte der Polymeren.

### Beispiel 7

Beispiel 1 wurde wiederholt, es wurden jedoch 6,8 mg (0,015 mmol) Ethylen(2-Me-4,5,6,7-tetrahydro-1-indenyl)₂zirkondichlorid eingesetzt.
Die Metallocenaktivität war 72,5 kgPP/g Metallocen x h.

VZ = 35 cm³/g; M_{w} = 20 750 g/mol; M_{w}/Mₙ = 1,9;
II = 94,5 %; nᵢₛₒ = 34; Schmp.= 141 °C; ΔH_{Schm.} = 92,4 J/g.

### Beispiel 8

Beispiel 7 wurde wiederholt, es wurden jedoch 28,1 mg (0,062 mmol) des Metallocens verwendet, die Polymerisationstemperatur betrug 50 °C.
Die Metallocenaktivität war 28,5 kgPP/g Metallocen x h.

VZ = 51 cm³/g; M_{w} = 28 200 g/mol; M_{w}/Mₙ = 2,2;
II = 94,8 %; nᵢₛₒ = 35; Schmp.= 143 °C; ΔH_{Schm.} = 97,9 J/g.

### Beispiel 9

Beispiel 7 wurde wiederholt, es wurden jedoch 50 mg (0,110 mmol) des Metallocens verwendet, die Polymerisationstemperatur betrug 30 °C.
Die Metallocenaktivität war 10,9 kgPP/g Metallocen x h.

VZ = 92 cm³/g; M_{w} = 93 800 g/mol; M_{w}/Mₙ = 2,2;
II = 95,5 %; nᵢₛₒ = 48; Schmp.= 151 °C; ΔH_{Schm.} = 99,0 J/g.

### Beispiele 10 - 12 und Vergleichsbeispiele F-H

Die Beispiele 7 bis 9 wurden wiederholt, verwendet wurden jedoch die Metallocene Ethylen(1-indenyl)₂zirkondichlorid (Metallocen 4) und Ethylen(2-Me-1-indenyl)₂zirkondichlorid (Metallocen 5)

| (Vergl.)-Beisp. | Metallocen | Polym.temp. [°C] | nᵢₛₒ | Schmp. [°C] | ΔH_{Schm.} [J/g] |
|---|---|---|---|---|---|
| F | 4 | 70 | 23 | 132 | 64,9 |
| G | 4 | 50 | 30 | 138 | 78,1 |
| H | 4 | 30 | 29 | 137 | 78,6 |
| 10 | 5 | 70 | 25 | 134 | 77,0 |
| 11 | 5 | 50 | 30 | 138 | 78,9 |
| 12 | 5 | 30 | 32 | 138 | 78,6 |

Der Vergleich der (Vergleichs)beispiele F bis H und 10 bis 12 mit den Beispielen 10 bis 12 belegt den Einfluß der Substitution in 2-Position verbunden mit der Verwendung des Tetrahydroindenylsystems. nᵢₛₒ, Schmelzpunkt und Schmelzwärme sind bei den Beispielen 10 - 12 jeweils deutlich höher - somit ist auch die Kristallinität und die Härte der Polymeren deutlich verbessert.

## Patentansprüche (Patentansprüche für folgende(n) Vertragsstaat(en): BE, DE, FR, GB, IT, NL)

1. Verbindung der Formel I 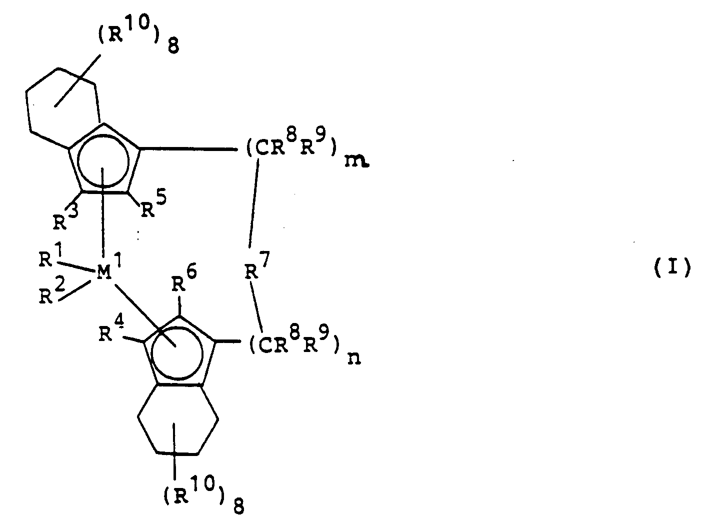 worin
M¹ ein Metall der Gruppe IVb, Vb oder VIb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁵, -SR¹⁵, -OSiR₃¹⁵, SiR₃¹⁵ oder -PR₂¹⁵-Rest bedeuten, worin R¹⁵ ein Halogenatom, eine C₁-C₁₀-Alkylgruppe oder eine C₆-C₁₀-Arylgruppe ist,
R⁵ und R⁶ gleich oder verschieden sind und die für R³ und R⁴ genannte Bedeutung haben, mit der Maßgabe, daß R⁵ und R⁶ nicht Wasserstoff sind,
R⁷ 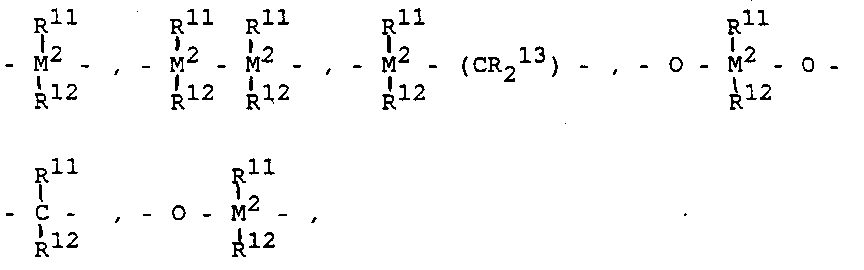 =BR¹¹, -AlR¹¹, -Ge-, -Sn-, -O-, -S-, =SO, =SO₂, =NR¹¹, =CO, =PR¹¹ oder =P(O)R¹¹ ist,
wobei
R¹¹, R¹² und R¹³ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
M² Silizium, Germanium oder Zinn ist,
R⁸ und R⁹ gleich oder verschieden sind und die für R¹¹ genannte Bedeutung haben,
m und n gleich oder verschieden sind und null, 1 oder 2 sind, wobei m plus n null, 1 oder 2 ist, und
die Reste R¹⁰ gleich oder verschieden sind und die für R¹¹, R¹² und R¹³ genannte Bedeutung haben.

2. Verbindung der Formel I gemäß Anspruch 1, dadurch gekennzeichnet, daß in Formel I M¹ Zr oder Hf, R¹ und R² gleich oder verschieden sind und Methyl oder Chlor, R³ und R⁴ Wasserstoff, R⁵ und R⁶ gleich oder verschieden sind und Methyl, Ethyl oder Trifluormethyl, R⁷ einen Rest 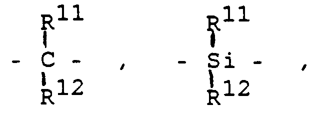 n plus m null oder 1 und R¹⁰
Wasserstoff bedeuten.

3. Verbindung der Formel I gemäß Anspruch 1 oder 2, dadurch gekennzeichnet, daß es sich um rac-Dimethylsilyl(2-methyl-4,5,6,7-tetrahydro-1-indenyl)₂zirkondichlorid, rac-Ethylen(2-methyl-4,5,6,7-tetrahydro-1-indenyl)₂-zirkondichlorid, rac-Dimethylsilyl(2-methyl-4,5,6,7-tetrahydro-1-indenyl)₂zirkondimethyl oder rac-Ethylen(2-methyl-4,5,6,7-tetrahydro-1-indenyl)₂zirkondimethyl handelt.

4. Verfahren zur Herstellung einer Verbindung der Formel I gemäß einem oder mehreren der Ansprüche 1 bis 3, dadurch gekennzeichnet, daß man
a) eine Verbindung der Formel II 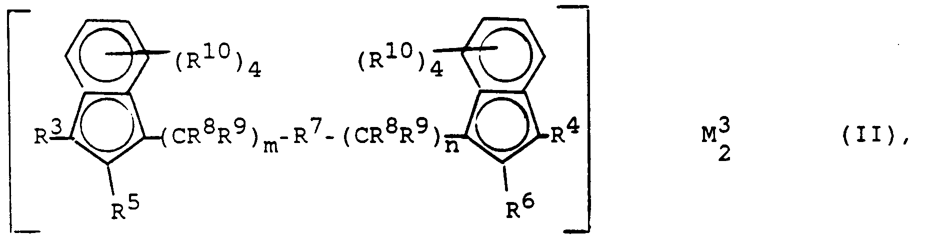 wobei R³-R¹⁰, m und n die in Formel I beschriebene Bedeutung haben und M³ ein Alkalimetall, bevorzugt Lithium, bedeutet, mit einer Verbindung der Formel III
M¹X₄ (III),
worin M¹ die in Formel I genannte Bedeutung besitzt und X ein Halogenatom, bevorzugt Chlor, bedeutet, umsetzt und das Reaktionsprodukt katalytisch hydriert oder
b) eine Verbindung der Formel IIa 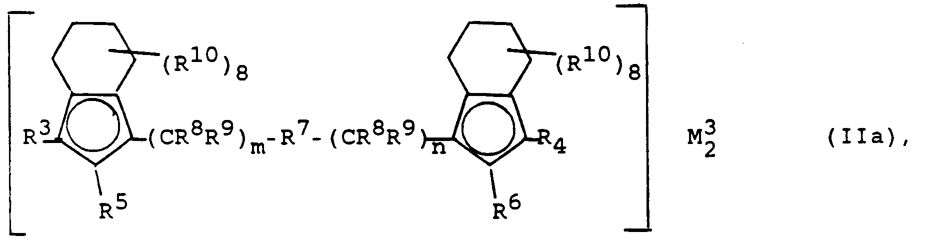 mit einer Verbindung der Formel III
M¹X₄ (III),
wobei alle Substituenten die unter a) genannten Bedeutungen besitzen, umsetzt und das unter a) und b) erhaltene Reaktionsprodukt gegebenenfalls derivatisiert.

5. Verwendung einer Verbindung der Formel I gemäß einem oder mehreren der Ansprüche 1 bis 3 als Katalysator bei der Olefinpolymerisation.

6. Verbindung der Formel Ia 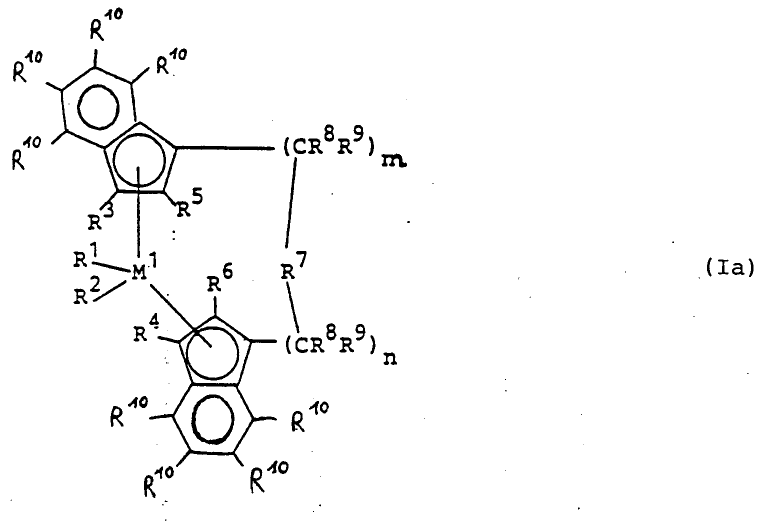 worin
M¹ ein Metall der Gruppe IVb, Vb oder VIb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁵, -SR¹⁵, -OSiR₃¹⁵, SiR₃¹⁵ oder -PR₂¹⁵-Rest bedeuten, worin R¹⁵ ein Halogenatom, eine C₁-C₁₀-Alkylgruppe oder eine C₆-C₁₀-Arylgruppe ist,
R⁵ und R⁶ gleich oder verschieden sind und die für R³ und R⁴ genannte Bedeutung haben, mit der Maßgabe, daß R⁵ und R⁶ nicht Wasserstoff sind,
R⁷ 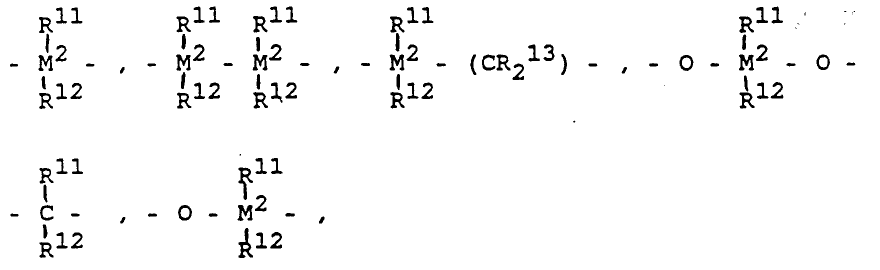 =BR¹¹, =AlR¹¹, -Ge-, -Sn-, -O-, -S-, =SO, =SO₂, =NR¹¹, =CO, =PR¹¹ oder =P(O)R¹¹ ist,
wobei
R¹¹, R¹² und R¹³ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
M² Silizium, Germanium oder Zinn ist,
R⁸ und R⁹ gleich oder verschieden sind und die für R¹¹ genannte Bedeutung haben,
m und n gleich oder verschieden sind und null, 1 oder 2 sind, wobei m plus n null, 1 oder 2 ist, und
die Reste R¹⁰ gleich oder verschieden sind und die für R¹¹, R¹² und R¹³ genannte Bedeutung haben.

7. Verbindung der Formel Ia gemäß Anspruch 6, worin R¹⁰ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder zwei Reste R¹⁰ jeweils mit den sie verbindeden Atomen einen Ring bilden.

## Patentansprüche (Patentansprüche für folgende(n) Vertragsstaat(en): ES)

1. Verfahren zur Herstellung einer Verbindung der Formel I 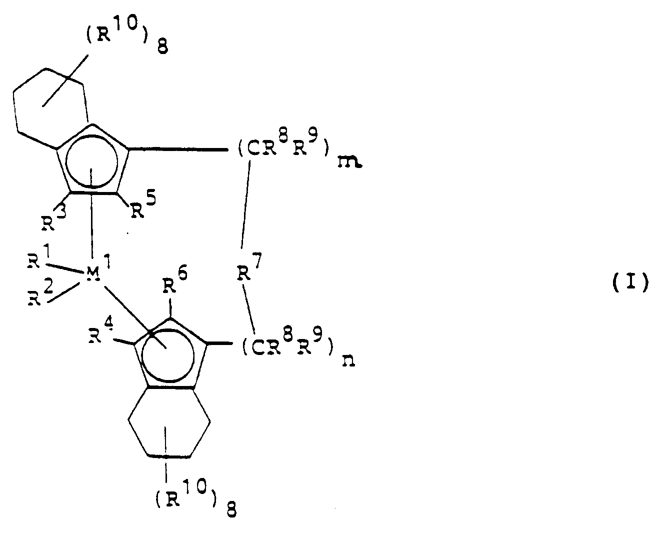 worin
M¹ ein Metall der Gruppe IVb, Vb oder VIb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁵, -SR¹⁵, -OSiR₃¹⁵, SiR₃¹⁵ oder -PR₂¹⁵-Rest bedeuten, worin R¹⁵ ein Halogenatom, eine C₁-C₁₀-Alkylgruppe oder eine C₆-C₁₀-Arylgruppe ist,
R⁵ und R⁶ gleich oder verschieden sind und die für R³ und R⁴ genannte Bedeutung haben, mit der Maßgabe, daß R⁵ und R⁶ nicht Wasserstoff sind,
R⁷ 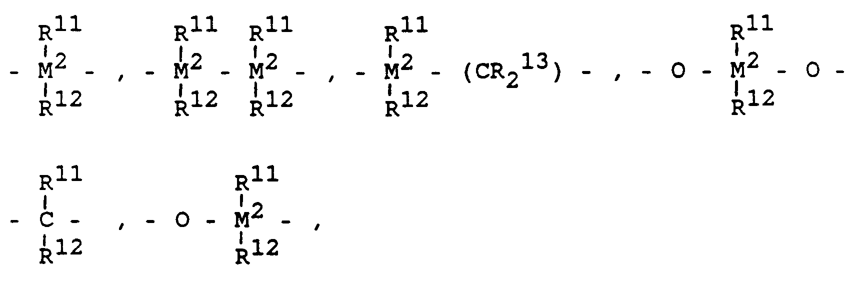 =BR¹¹, =AlR¹¹, -Ge-, -Sn-, -O-, -S-, =SO, =SO₂, =NR¹¹, =CO, =PR¹¹ oder =P(O)R¹¹ ist,
wobei
R¹¹, R¹² und R¹³ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
M² Silizium, Germanium oder Zinn ist,
R⁸ und R⁹ gleich oder verschieden sind und die für R¹¹ genannte Bedeutung haben,
m und n gleich oder verschieden sind und null, 1 oder 2 sind, wobei m plus n null, 1 oder 2 ist, und
die Reste R¹⁰ gleich oder verschieden sind und die für R¹¹, R¹² und R¹³ genannte Bedeutung haben, dadurch gekennzeichnet, daß man
a) eine Verbindung der Formel II 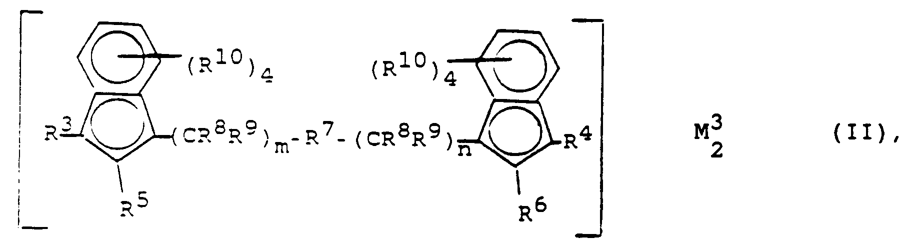 wobei R³-R¹⁰, m und n die in Formel I beschriebene Bedeutung haben und M³ ein Alkalimetall, bevorzugt Lithium, bedeutet, mit einer Verbindung der Formel III
M¹X₄ (III),
worin M¹ die in Formel I genannte Bedeutung besitzt und X ein Halogenatom, bevorzugt Chlor, bedeutet, umsetzt und das Reaktionsprodukt katalytisch hydriert oder
b) eine Verbindung der Formel IIa 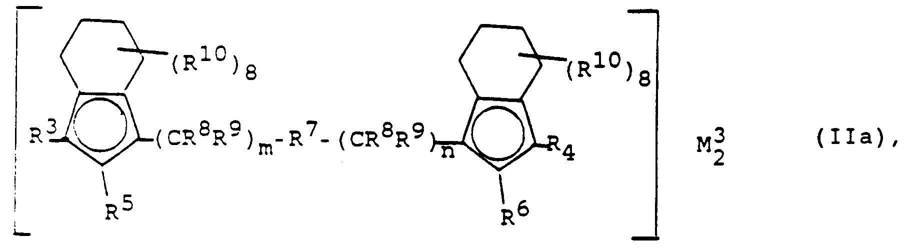 mit einer Verbindung der Formel III
M¹X₄ (III),
wobei alle Substituenten die unter a) genannten Bedeutungen besitzen, umsetzt und das unter a) und b) erhaltene Reaktionsprodukt gegebenenfalls derivatisiert.

2. Verfahren gemäß Anspruch 1, dadurch gekennzeichnet, daß in Formel I M¹ Zr oder Hf, R¹ und R² gleich oder verschieden sind und Methyl oder Chlor, R³ und R⁴ Wasserstoff, R⁵ und R⁶ gleich oder verschieden sind und Methyl, Ethyl oder Trifluormethyl, R⁷ einen Rest 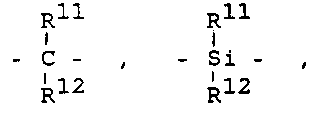 n plus m null oder 1 und R¹⁰ Wasserstoff bedeuten.

3. Verfahren gemäß Anspruch 1 oder 2, dadurch gekennzeichnet, daß es sich bei der Verbindung der Formel I um rac-Dimethylsilyl(2-methyl-4,5,6,7-tetrahydro-1-indenyl)₂zirkondichlorid, rac-Ethylen(2-methyl-4,5,6,7-tetrahydro-1-indenyl)₂zirkondichlorid, rac-Dimethylsilyl(2-methyl-4,5,6,7-tetrahydro-1-indenyl)₂zirkondimethyl oder rac-Ethylen(2-methyl-4,5,6,7-tetrahydro-1-indenyl)₂zirkondimethyl handelt.

4. Verwendung einer Verbindung der Formel I gemäß einem oder mehreren der Ansprüche 1 bis 3 als Katalysator bei der Olefinpolymerisation.

5. Verfahren zur Herstellung einer Verbindung der Formel Ia 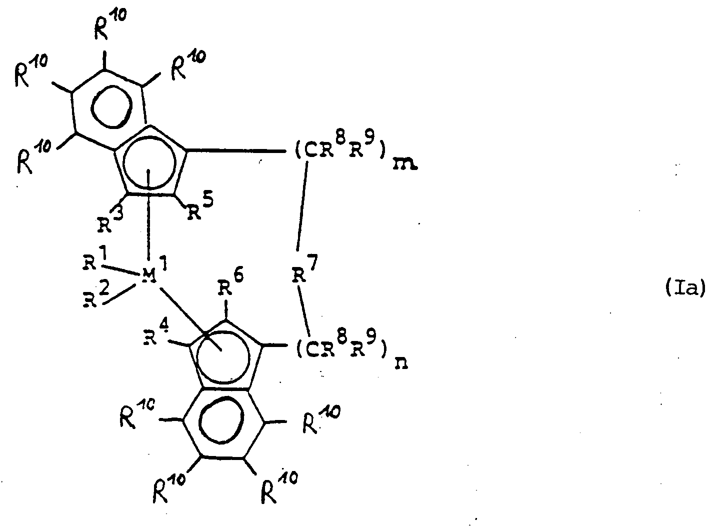 worin
M¹ ein Metall der Gruppe IVb, Vb oder VIb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁵, -SR¹⁵, -OSiR₃¹⁵, SiR₃¹⁵ oder -PR₂¹⁵-Rest bedeuten, worin R¹⁵ ein Halogenatom, eine C₁-C₁₀-Alkylgruppe oder eine C₆-C₁₀-Arylgruppe ist,
R⁵ und R⁶ gleich oder verschieden sind und die für R³ und R⁴ genannte Bedeutung haben, mit der Maßgabe, daß R⁵ und R⁶ nicht Wasserstoff sind,
R⁷ 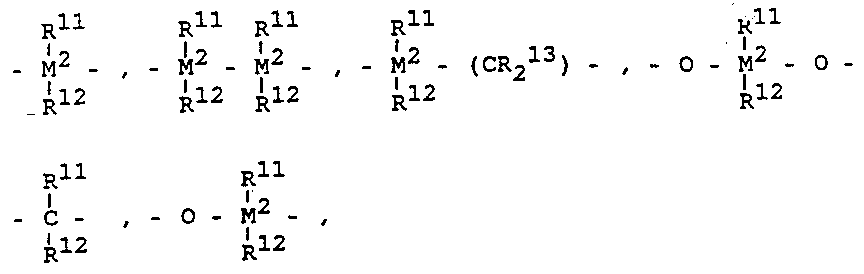 =BR¹¹, =AlR¹¹, -Ge-, -Sn-, -O-, -S-, =SO, =SO₂, =NR¹¹, =CO, =PR¹¹ oder =P(O)R¹¹ ist,
wobei
R¹¹, R¹² und R¹³ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
M² Silizium, Germanium oder Zinn ist,
R⁸ und R⁹ gleich oder verschieden sind und die für R¹¹ genannte Bedeutung haben,
m und n gleich oder verschieden sind und null, 1 oder 2 sind, wobei m plus n null, 1 oder 2 ist, und
die Reste R¹⁰ gleich oder verschieden sind und die für R¹¹, R¹² und R¹³ genannte Bedeutung haben, dadurch gekennzeichnet, daß man
eine Verbindung der Formel II 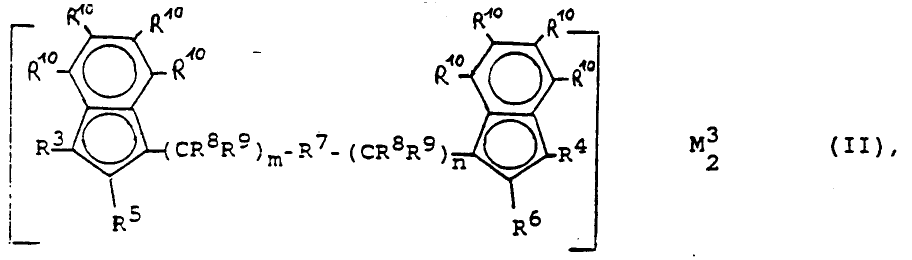 wobei R³-R¹⁰, m und n die in Formel Ia beschriebene Bedeutung haben und M³ ein Alkalimetall, bevorzugt Lithium, bedeutet, mit einer Verbindung der Formel III
M¹X₄ (III),
worin M¹ die in Formel Ia genannte Bedeutung besitzt und X ein Halogenatom, bevorzugt Chlor, bedeutet, umsetzt und das erhaltene Reaktionsprodukt gegebenenfalls derivatisiert.

6. Verfahren gemäß Anspruch 5, worin R¹⁰ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder zwei Reste R¹⁰ jeweils mit den sie verbindeden Atomen einen Ring bilden.

## Claims (Claims for the following Contracting State(s): BE, DE, FR, GB, IT, NL)

1. A compound of the formula I 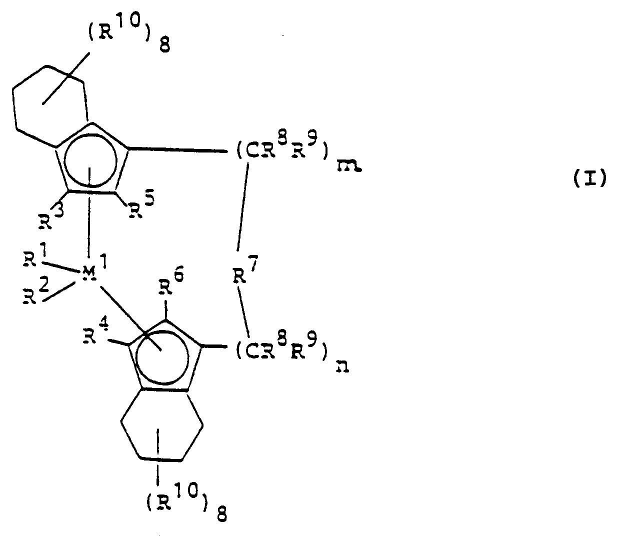 in which
M¹ is a metal from group IVb, Vb or VIb of the Periodic Table,
R¹ and R² are identical or different and are a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ and R⁴ are identical or different and are a hydrogen atom, a halogen atom, a C₁-C₁₀-alkyl group, which may be halogenated, a C₆-C₁₀-aryl group, an -NR₂¹⁵, -SR¹⁵, -OSiR₃¹⁵, -SiR₃¹⁵ or -PR₂¹⁵ radical in which R¹⁵ is a halogen atom, a C₁-C₁₀-alkyl group or a C₆-C₁₀-aryl group,
R⁵ and R⁶ are identical or different and are as defined for R³ and R⁴, with the proviso that R⁵ and R⁶ are not hydrogen,
R⁷ is 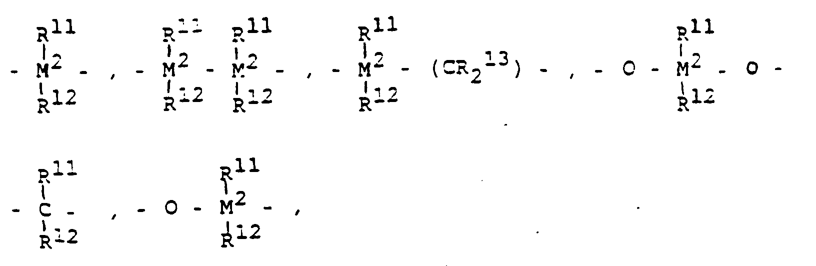 =BR¹¹, =AlR¹¹, -Ge-, -Sn-, -O-, -S-, =SO, =SO₂, =NR¹¹, =CO, =PR¹¹ or =P(O)R¹¹,
where
R¹¹, R¹² and R¹³ are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹¹ and R¹² or R¹¹ and R¹³, with the atoms connecting them, form a ring,
M² is silicon, germanium or tin,
R⁸ and R⁹ are identical or different and are as defined for R¹¹,
m and n are identical or different and are zero, 1 or 2, m plus n being zero, 1 or 2, and
the radicals R¹⁰ are identical or different and are as defined for R¹¹, R¹² and R¹³.

2. A compound of the formula I as claimed in claim 1, wherein, in formula I, M¹ is Zr or Hf, R¹ and R² are identical or different and are methyl or chlorine, R³ and R⁴ are hydrogen, R⁵ and R⁶ are identical or different and are methyl, ethyl or trifluoromethyl, R⁷ is a 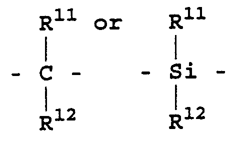 radical,
n plus m is zero or 1, and R¹⁰ is hydrogen.

3. A compound of the formula I as claimed in claim 1 or 2, wherein the compound is rac-dimethylsilyl-(2-methyl-4,5,6,7-tetrahydro-1-indenyl)₂zirconium dichloride, rac-ethylene(2-methyl-4,5,6,7-tetrahydro-1-indenyl)₂zirconium dichloride, rac-dimethylsilyl(2-methyl-4,5,6,7-tetrahydro-1-indenyl)₂dimethylzirconium or rac-ethylene(2-methyl-4,5,6,7-tetrahydro-1-indenyl)₂dimethylzirconium.

4. A process for the preparation of a compound of the formula I as claimed in one or more of claims 1 to 3, which comprises
a) reacting a compound of the formula II 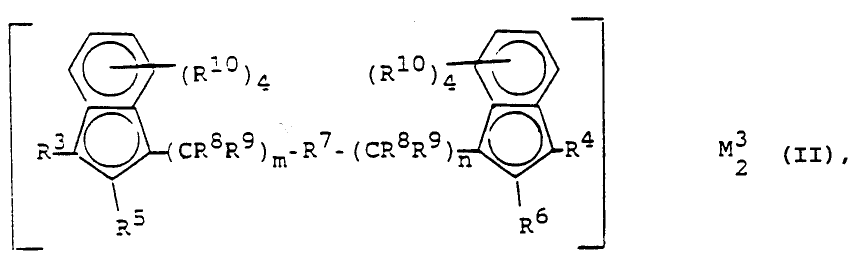 in which R³-R¹⁰, m and n are as defined in formula I and M³ is an alkali metal, preferably lithium, with a compound of the formula III
M¹X₄ (III)
in which M¹ is as defined in formula I, and X is a halogen atom, preferably chlorine, and catalytically hydrogenating the reaction product, or
b) reacting a compound of the formula IIa 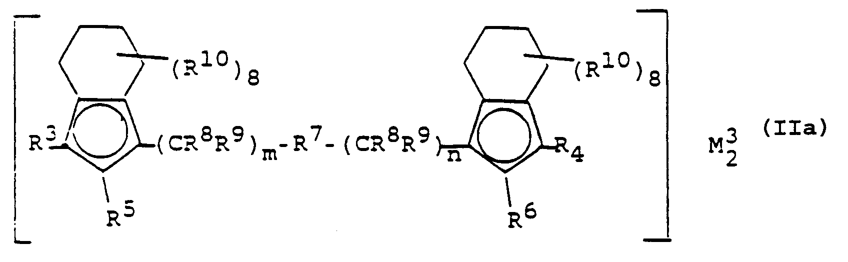 with a compound of the formula III
M¹X₄ (III)
in which all the substituents are as defined under a), and, if desired, derivatizing the reaction product obtained under a) or b).

5. The use of a compound of the formula I as claimed in one or more of claims 1 to 3 as a catalyst in the polymerization of olefins.

6. A compound of the formula Ia 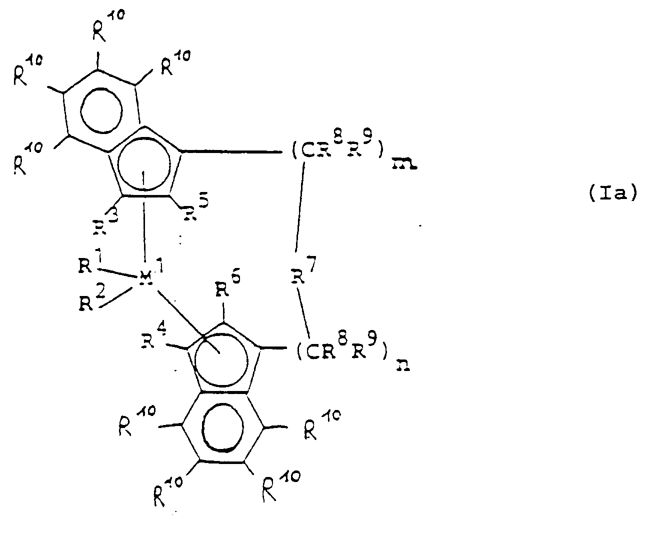 in which
M¹ is a metal from group IVb, Vb or VIb of the Periodic Table,
R¹ and R² are identical or different and are a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ and R⁴ are identical or different and are a hydrogen atom, a halogen atom, a C₁-C₁₀-alkyl group, which may be halogenated, a C₆-C₁₀-aryl group, an -NR₂¹⁵, -SR¹⁵, -OSiR₃¹⁵, -SiR₃¹⁵ or -PR₂¹⁵ radical in which R¹⁵ is a halogen atom, a C₁-C₁₀-alkyl group or a C₆-C₁₀-aryl group,
R⁵ and R⁶ are identical or different and are as defined for R³ and R⁴, with the proviso that R⁵ and R⁶ are not hydrogen,
R⁷ is 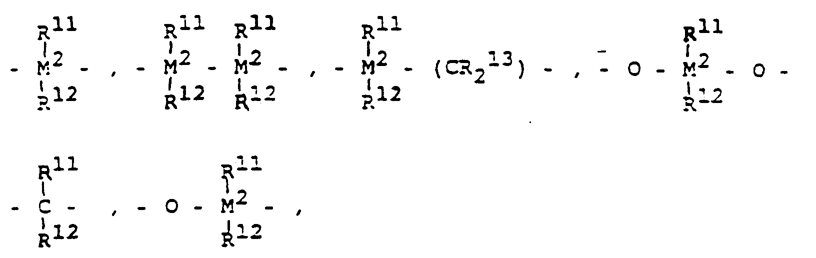 =BR¹¹, =AlR¹¹, -Ge-, -Sn-, -O-, -S-, =SO, =SO₂, =NR¹¹, =CO, =PR¹¹ or =P(O)R¹¹,
where
R¹¹, R¹² and R¹³ are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹¹ and R¹² or R¹¹ and R¹³, with the atoms connecting them, form a ring,
M² is silicon, germanium or tin,
R⁸ and R⁹ are identical or different and are as defined for R¹¹,
m and n are identical or different and are zero, 1 or 2, m plus n being zero, 1 or 2, and
the radicals R¹⁰ are identical or different and are as defined for R¹¹, R¹² and R¹³.

7. A compound of the formula Ia as claimed in claim 6, in which R¹⁰ are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or two radicals R¹⁰, with the atoms connecting them, form a ring.

## Claims (Claims for the following Contracting State(s): ES)

1. A process for the preparation of a compound of the formula I 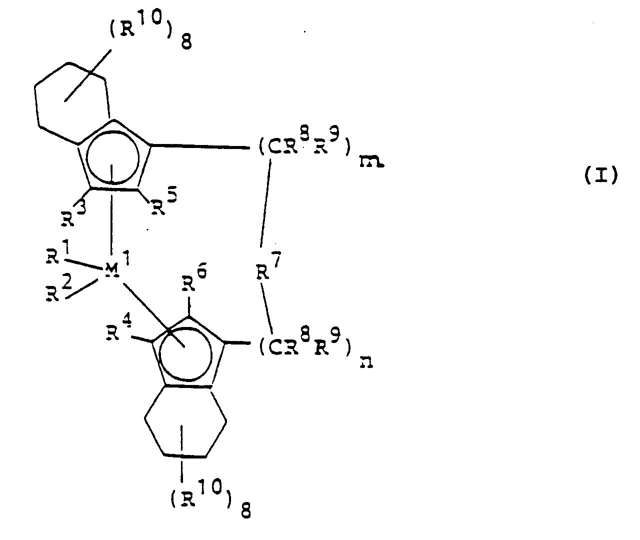 in which
M¹ is a metal from group IVb, Vb or VIb of the Periodic Table,
R¹ and R² are identical or different and are a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ and R⁴ are identical or different and are a hydrogen atom, a halogen atom, a C₁-C₁₀-alkyl group, which may be halogenated, a C₆-C₁₀-aryl group, an -NR₂¹⁵, -SR¹⁵, -OSiR₃¹⁵, -SiR₃¹⁵ or -PR₂¹⁵ radical in which R¹⁵ is a halogen atom, a C₁-C₁₀-alkyl group or a C₆-C₁₀-aryl group,
R⁵ and R⁶ are identical or different and are as defined for R³ and R⁴, with the proviso that R⁵ and R⁶ are not hydrogen,
R⁷ is 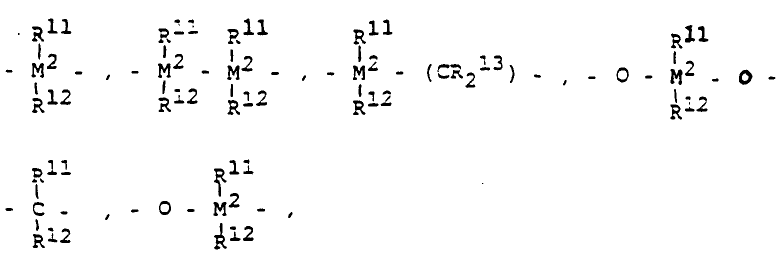 =BR¹¹, =AlR¹¹, -Ge-, -Sn-, -O-, -S-, =SO, =SO₂, =NR¹¹, =CO, =PR¹¹ or =P(O)R¹¹,
where
R¹¹, R¹² and R¹³ are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹¹ and R¹² or R¹¹ and R¹³, with the atoms connecting them, form a ring,
M² is silicon, germanium or tin,
R⁸ and R⁹ are identical or different and are as defined for R¹¹,
m and n are identical or different and are zero, 1 or 2, m plus n being zero, 1 or 2, and
the radicals R¹⁰ are identical or different and are as defined for R¹¹, R¹² and R¹³ which comprises
a) reacting a compound of the formula II 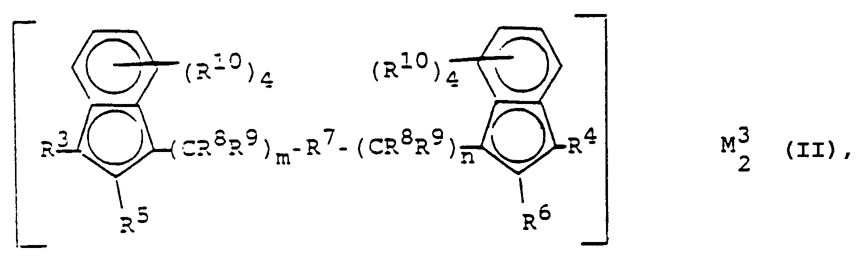 in which R³-R¹⁰, m and n are as defined in formula I and M³ is an alkali metal, preferably lithium, with a compound of the formula III
M¹X₄ (III)
in which M¹ is as defined in formula I, and X is a halogen atom, preferably chlorine, and catalytically hydrogenating the reaction product, or
b) reacting a compound of the formula IIa 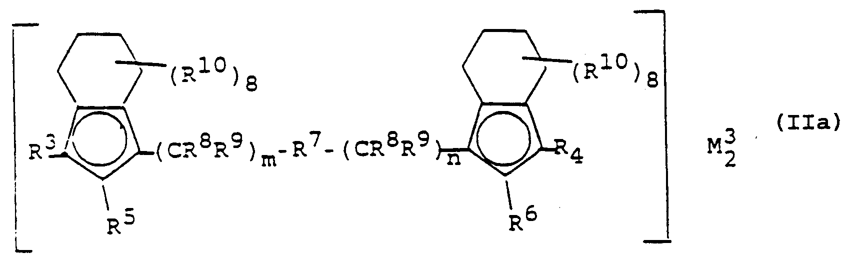 with a compound of the formula III
M¹X₄ (III)
in which all the substituents are as defined under a), and, if desired, derivatizing the reaction product obtained under a) or b).

2. The process as claimed in claim 1, wherein, in formula I, M¹ is Zr or Hf, R¹ and R² are identical or different and are methyl or chlorine, R³ and R⁴ are hydrogen, R⁵ and R⁶ are identical or different and are methyl, ethyl or trifluoromethyl, R⁷ is a 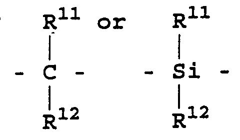 radical,
n plus m is zero or 1, and R¹⁰ is hydrogen.

3. The process as claimed in claim 1 or 2, wherein the compound of the formula I is rac-dimethylsilyl-(2-methyl-4,5,6,7-tetrahydro-1-indenyl)₂zirconium dichloride, rac-ethylene(2-methyl-4,5,6,7-tetrahydro-1-indenyl)₂zirconium dichloride, rac-dimethylsilyl(2-methyl-4,5,6,7-tetrahydro-1-indenyl)₂dimethylzirconium or rac-ethylene(2-methyl-4,5,6,7-tetrahydro-1-indenyl)₂dimethylzirconium.

4. The use of a compound of the formula I as claimed in one or more of claims 1 to 3 as a catalyst in the polymerization of olefins.

5. A process for the preparation of a compound of the formula Ia 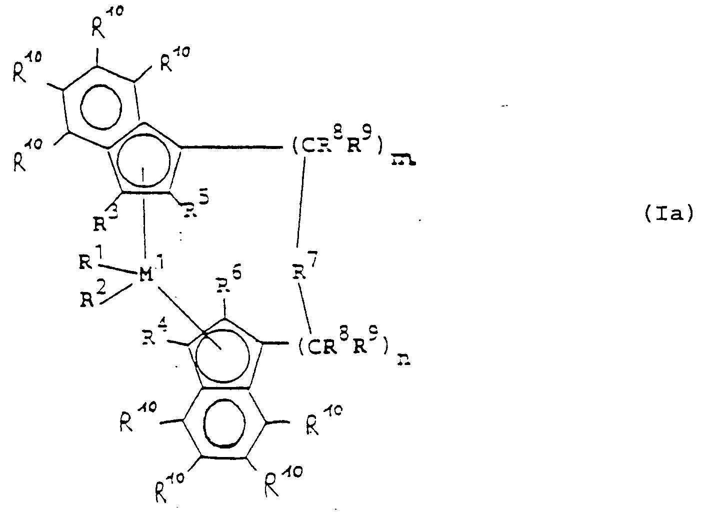 in which
M¹ is a metal from group IVb, Vb or VIb of the Periodic Table,
R¹ and R² are identical or different and are a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ and R⁴ are identical or different and are a hydrogen atom, a halogen atom, a C₁-C₁₀-alkyl group, which may be halogenated, a C₆-C₁₀-aryl group, an -NR₂¹⁵, -SR¹⁵, -OSiR₃¹⁵, -SiR₃¹⁵ or -PR₂¹⁵ radical in which R¹⁵ is a halogen atom, a C₁-C₁₀-alkyl group or a C₆-C₁₀-aryl group,
R⁵ and R⁶ are identical or different and are as defined for R³ and R⁴, with the proviso that R⁵ and R⁶ are not hydrogen,
R⁷ is 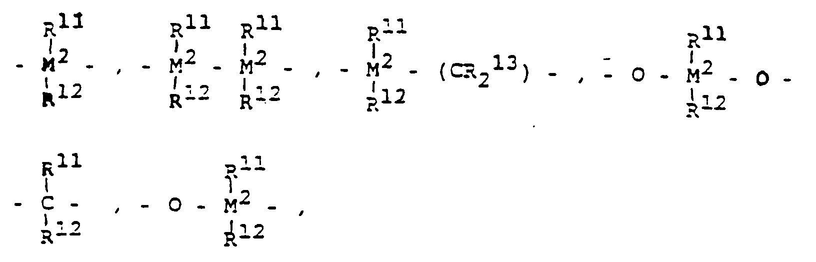 =BR¹¹, =AlR¹¹, -Ge-, -Sn-, -O-, -S-, =SO, =SO₂, =NR¹¹, =CO, =PR¹¹ or =P(O)R¹¹,
where
R¹¹, R¹² and R¹³ are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹¹ and R¹² or R¹¹ and R¹³, with the atoms connecting them, form a ring,
M² is silicon, germanium or tin,
R⁸ and R⁹ are identical or different and are as defined for R¹¹,
m and n are identical or different and are zero, 1 or 2, m plus n being zero, 1 or 2, and
the radicals R¹⁰ are identical or different and are as defined for R¹¹, R¹² and R¹³, which comprises
a) reacting a compound of the formula II 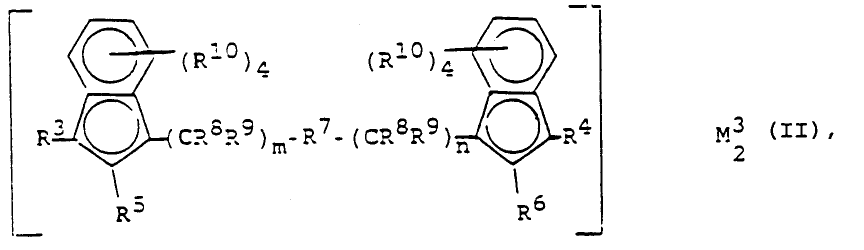 in which R³-R¹⁰, m and n are as defined in formula Ia and M³ is an alkali metal, preferably lithium, with a compound of the formula III
M¹X₄ (III)
in which M¹ is as defined in formula Ia, and X is a halogen atom, preferably chlorine, and, if desired, derivatizing the reaction product obtained.

6. A process as claimed in claim 5, in which R¹⁰ are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or two radicals R¹⁰, with the atoms connecting them, form a ring.

## Revendications (Revendications pour l'(les) Etat(s) contractant(s) suivant(s): BE, DE, FR, GB, IT, NL)

1. Composé de formule I 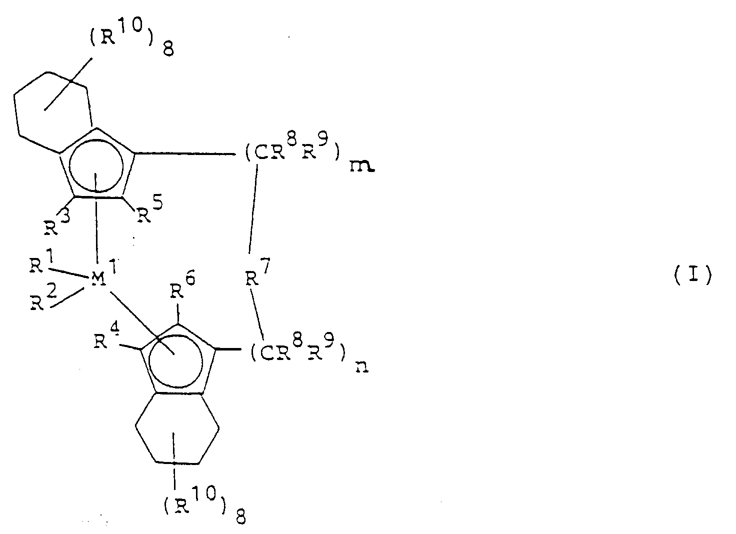 dans laquelle
M¹ est un métal du Groupe IVb, Vb ou VIb du Tableau Périodique,
R¹ et R² sont identiques ou différents et représentent un atome d'hydrogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylakyle en C₇-C₄₀, un groupe alkylaryle en C₇-C₄₀, un groupe arylalcényle en C₈-C₄₀ ou un atome d'halogène,
R³ et R⁴ sont identiques ou différents et représentent un atome d'hydrogène, un atome d'halogène, un groupe alkyle en C₁-C₁₀ pouvant être halogéné, un groupe aryle en C₆-C₁₀, un groupe -NR₂¹⁵, -SR¹⁵, -OSiR₃¹⁵, SiR₃¹⁵ ou -PR₂¹⁵, où R¹⁵ est un atome d'halogène, un groupe alkyle en C₁-C₁₀ ou un groupe aryle en C₆-C₁₀,
R⁵ et R⁶ sont identiques ou différents et ont les significations données pour R³ et R⁴, du moment que R⁵ et R⁶ ne sont pas des hydrogènes,
R⁷ est 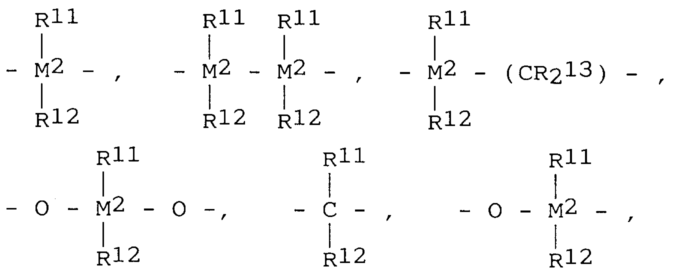 =BR¹¹, =AlR¹¹, -Ge-, -Sn-, -O-, -S-, =SO, =SO₂, =NR¹¹, =CO, =PR¹¹ ou =P(O)R¹¹,
où
R¹¹, R¹² et R¹³ sont identiques ou différents et représentent un atome d'hydrogène, un atome d'halogène, un groupe alkyle en C₁-C₁₀, un groupe fluoralkyle en C₁-C₁₀, un groupe aryle en C₆-C₁₀, un groupe fluoraryle en C₆-C₁₀, un groupe alcoxy en C₁-C₁₀, un groupe alcényle en C₂-C₁₀, un groupe arylakyle en C₇-C₄₀, un groupe arylalcényle en C₈-C₄₀, un groupe alkylaryle en C₇-C₄₀, ou encore R¹¹ et R¹², ou R¹¹ et R¹³, forment un cycle avec les atomes qui les relient,
M² est le silicium, le germanium ou l'étain,
R⁸ et R⁹ sont identiques ou différents et ont les significations données pour R¹¹,
m et n sont identiques ou différents et valent zéro, 1 ou 2, auquel cas m plus n vaut zéro, 1 ou 2, et
les radicaux R¹⁰ sont identiques ou différents et ont les significations données pour R¹¹, R¹² et R¹³.

2. Composé de formule I selon la revendication 1, caractérisé en ce que, dans la formule I, M¹ est Zr ou Hf, R¹ et R² sont identiques ou différents et représentent le groupe méthyle ou chloro, R³ et R⁴ sont des hydrogènes, R⁵ et R⁶ sont identiques ou différents et représentent le groupe méthyle, éthyle ou trifluorométhyle, R⁷ est un radical 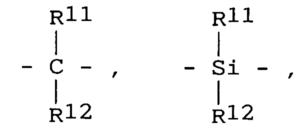 n plus m vaut zéro ou 1, et R¹⁰ est un hydrogène ;

3. Composé de formule I selon la revendication 1 ou 2, caractérisé en ce qu'il s'agit du dichlorure de rac-diméthylsilyl(2-méthyl-4,5,6,7-tétrahydro-1-indényl)₂-zirconium, du dichlorure de rac-éthylène(2-méthyl-4,5,6,7-tétrahydro-1-indényl)₂-zirconium, du rac-diméthylsilyl(2-méthyl-4,5,6,7-tétrahydro-1-indényl)₂-zirconium-diméthyle ou du rac-éthylène(2-méthyl-4,5,6,7-tétrahydro-1-indényl)₂-zirconium-diméthyle.

4. Procédé pour préparer un composé de formule I selon l'une ou plusieurs des revendications 1 à 3, caractérisé en ce que
a) on fait réagir un composé de formule II 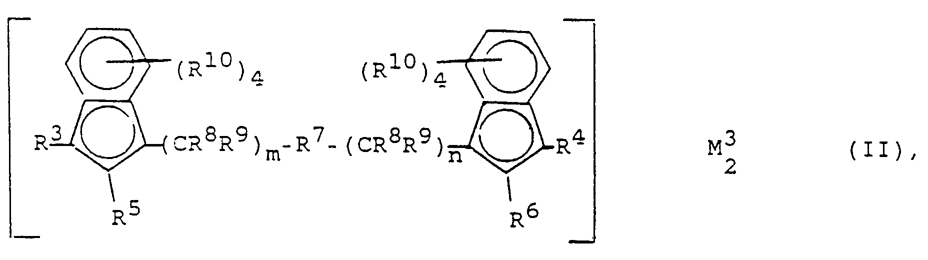 dans laquelle R³-R¹⁰, m et n ont les significations données dans la formule I, et M³ est un métal alcalin, de préférence le lithium, avec un composé de formule III
M¹X₄ (III),
dans laquelle M¹ a les significations données dans la formule I et X est un atome d'halogène, de préférence le chlore, et on soumet le produit de la réaction à une hydrogénation catalytique, ou bien
b) on fait réagir un composé de formule IIa 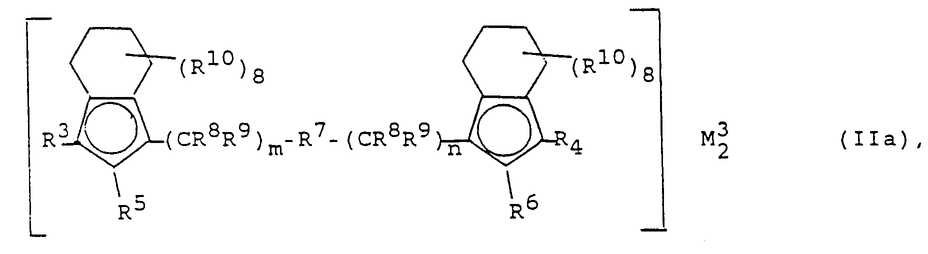 avec un composé de formule III
M¹X₄ (III),
où tous les substituants ont les significations données en a), puis on convertit en dérivé éventuellement le produit de réaction obtenu en a) et b).

5. Utilisation d'un composé de formule I selon l'une ou plusieurs des revendications 1 à 3, comme catalyseur lors de la polymérisation des oléfines.

6. Composé de formule Ia 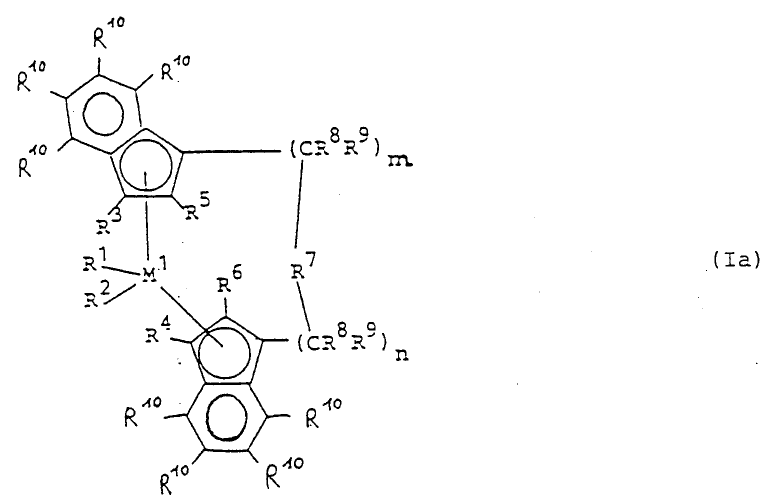 dans laquelle
M¹ est un métal du Groupe IVb, Vb ou VIb du Tableau Périodique,
R¹ et R² sont identiques ou différents et représentent un atome d'hydrogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylakyle en C₇-C₄₀, un groupe alkylaryle en C₇-C₄₀, un groupe arylalcényle en C₈-C₄₀ ou un atome d'halogène,
R³ et R⁴ sont identiques ou différents et représentent un atome d'hydrogène, un atome d'halogène, un groupe alkyle en C₁-C₁₀ pouvant être halogéné, un groupe aryle en C₆-C₁₀, un groupe -NR₂¹⁵, -SR¹⁵, -OSiR₃¹⁵, SiR₃¹⁵ ou -PR₂¹⁵, où R¹⁵ est un atome d'halogène, un groupe alkyle en C₁-C₁₀ ou un groupe aryle en C₆-C₁₀,
R⁵ et R⁶ sont identiques ou différents et ont les significations données pour R³ et R⁴, du moment que R⁵ et R⁶ ne sont pas des hydrogènes,
R⁷ est 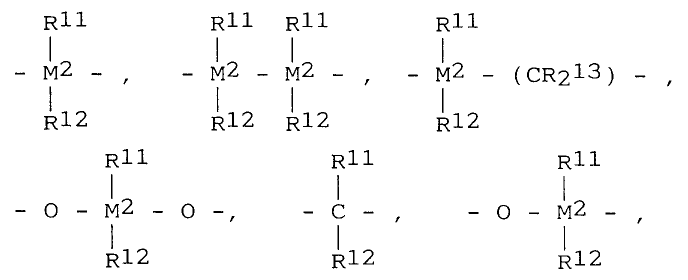 =BR¹¹, =AlR¹¹, -Ge-, -Sn-, -O-, -S-, =SO, =SO₂, =NR¹¹, =CO, =PR¹¹ ou =P(O)R¹¹,
où
R¹¹, R¹² et R¹³ sont identiques ou différents et représentent un atome d'hydrogène, un atome d'halogène, un groupe alkyle en C₁-C₁₀, un groupe fluoralkyle en C₁-C₁₀, un groupe aryle en C₆-C₁₀, un groupe fluoraryle en C₆-C₁₀, un groupe alcoxy en C₁-C₁₀, un groupe alcényle en C₂-C₁₀, un groupe arylakyle en C₇-C₄₀, un groupe arylalcényle en C₈-C₄₀, un groupe alkylaryle en C₇-C₄₀, ou encore R¹¹ et R¹², ou R¹¹ et R¹³, forment un cycle avec les atomes qui les relient,
M² est le silicium, le germanium ou l'étain,
R⁸ et R⁹ sont identiques ou différents et ont les significations données pour R¹¹,
m et n sont identiques ou différents et valent zéro, 1 ou 2, auquel cas m plus n vaut zéro, 1 ou 2, et
les radicaux R¹⁰ sont identiques ou différents et ont les significations données pour R¹¹, R¹² et R¹³.

7. Composé de formule la selon la revendication 6, dans lequel les radicaux R¹⁰ sont identiques ou différents et représentent un atome d'hydrogène, un atome d'halogène, un groupe alkyle en C₁-C₁₀, un groupe fluoralkyle en C₁-C₁₀, un groupe aryle en C₆-C₁₀, un groupe fluoraryle en C₆-C₁₀, un groupe alcoxy en C₁-C₁₀, un groupe alcényle en C₂-C₁₀, un groupe arylakyle en C₇-C₄₀, un groupe arylalcényle en C₈-C₄₀, un groupe alkylaryle en C₇-C₄₀, ou encore deux radicaux R¹⁰ forment un cycle avec les atomes qui les relient.

## Revendications (Revendications pour l'(les) Etat(s) contractant(s) suivant(s): ES)

1. Procédé pour préparer un composé de formule I 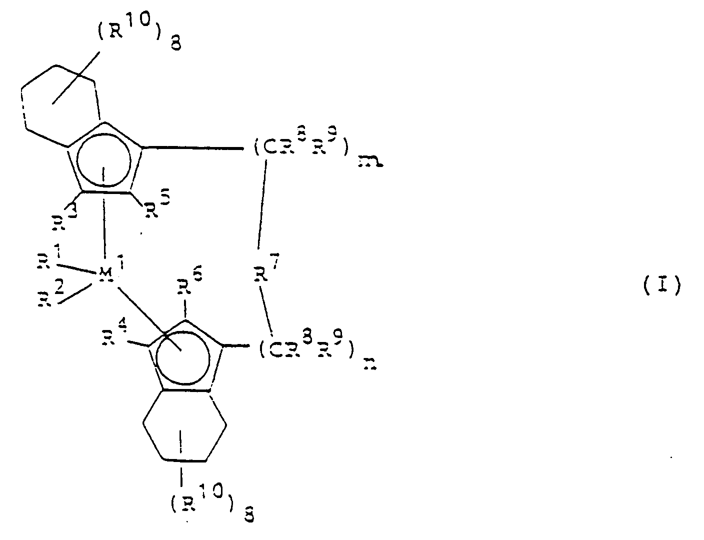 dans laquelle
M¹ est un métal du Groupe IVb, Vb ou VIb du Tableau Périodique,
R¹ et R² sont identiques ou différents et représentent un atome d'hydrogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylakyle en C₇-C₄₀, un groupe alkylaryle en C₇-C₄₀, un groupe arylalcényle en C₈-C₄₀ ou un atome d'halogène,
R³ et R⁴ sont identiques ou différents et représentent un atome d'hydrogène, un atome d'halogène, un groupe alkyle en C₁-C₁₀ pouvant être halogéné, un groupe aryle en C₆-C₁₀, un groupe -NR₂¹⁵, -SR¹⁵, -OSiR₃¹⁵, SiR₃¹⁵ ou -PR₂¹⁵, où R¹⁵ est un atome d'halogène, un groupe alkyle en C₁-C₁₀ ou un groupe aryle en C₆-C₁₀,
R⁵ et R⁶ sont identiques ou différents et ont les significations données pour R³ et R⁴, du moment que R⁵ et R⁶ ne sont pas des hydrogènes,
R⁷ est 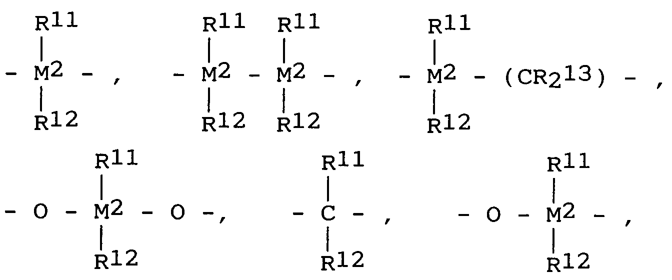 =BR¹¹, =AlR¹¹, -Ge-, -Sn-, -O-, -S-, =SO, =SO₂, =NR¹¹, =CO, =PR¹¹ ou =P(O)R¹¹,
où
R¹¹, R¹² et R¹³ sont identiques ou différents et représentent un atome d'hydrogène, un atome d'halogène, un groupe alkyle en C₁-C₁₀, un groupe fluoralkyle en C₁-C₁₀, un groupe aryle en C₆-C₁₀, un groupe fluoraryle en C₆-C₁₀, un groupe alcoxy en C₁-C₁₀, un groupe alcényle en C₂-C₁₀, un groupe arylakyle en C₇-C₄₀, un groupe arylalcényle en C₈-C₄₀, un groupe alkylaryle en C₇-C₄₀, ou encore R¹¹ et R¹², ou R¹¹ et R¹³, forment un cycle avec les atomes qui les relient,
M² est le silicium, le germanium ou l'étain,
R⁸ et R⁹ sont identiques ou différents et ont les significations données pour R¹¹,
m et n sont identiques ou différents et valent zéro, 1 ou 2, auquel cas m plus n vaut zéro, 1 ou 2, et
les radicaux R¹⁰ sont identiques ou différents et ont les significations données pour R¹¹, R¹² et R¹³,
caractérisé en ce que
a) on fait réagir un composé de formule II 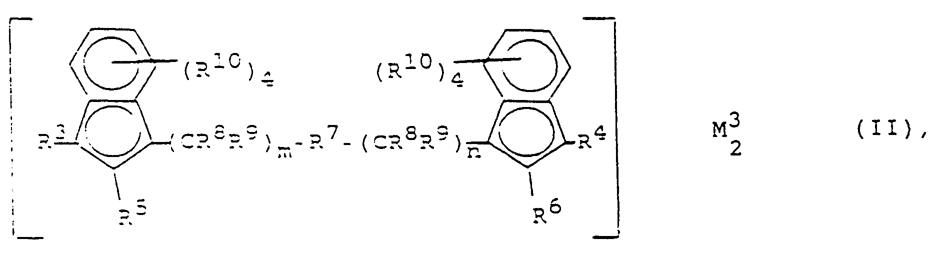 dans laquelle R³-R¹⁰, m et n ont les significations données dans la formule I, et M³ est un métal alcalin, de préférence le lithium, avec un composé de formule III
M¹X₄ (III),
dans laquelle M¹ a les significations données dans la formule I et X est un atome d'halogène, de préférence le chlore, et on soumet le produit de la réaction à une hydrogénation catalytique, ou bien
b) on fait réagir un composé de formule IIa 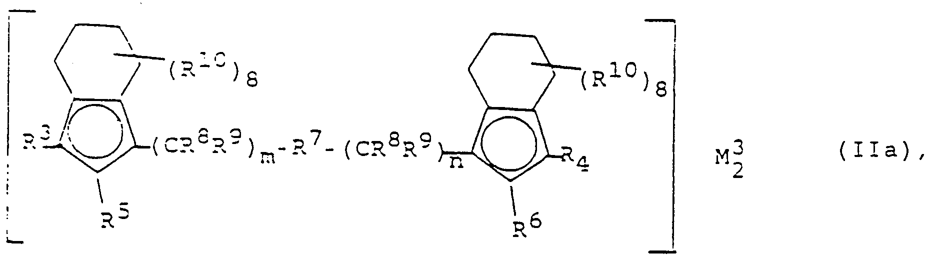 avec un composé de formule III
M¹X₄ (III),
où tous les substituants ont les significations données en a), puis on convertit éventuellement le produit de réaction obtenu en a) et b).

2. Procédé selon la revendication 1, caractérisé en ce que, dans la formule I, M¹ est Zr ou Hf, R¹ et R² sont identiques ou différents et représentent le groupe méthyle ou chloro, R³ et R⁴ sont des hydrogènes, R⁵ et R⁶ sont identiques ou différents et représentent le groupe méthyle, éthyle ou trifluorométhyle, R⁷ est un radical 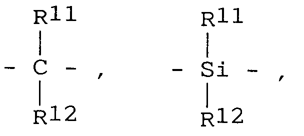 n plus m vaut zéro ou 1, et R¹⁰ est un hydrogène ;

3. Procédé selon la revendication 1 ou 2, caractérisé en ce que, pour ce qui est du composé de formule I, il s'agit du dichlorure de rac-diméthylsilyl(2-méthyl-4,5,6,7-tétrahydro-1-indényl)₂-zirconium, du dichlorure de rac-éthylène(2-méthyl-4,5,6,7-tétrahydro-1-indényl)₂-zirconium, du rac-diméthylsilyl(2-méthyl-4,5,6,7-tétrahydro-1-indényl)₂-zirconium-diméthyle et du rac-éthylène-(2-méthyl-4,5,6,7-tétrahydro-1-indényl)₂-zirconium-diméthyle.

4. Utilisation d'un composé de formule I selon l'une ou plusieurs des revendications 1 à 3, comme catalyseur lors de la polymérisation des oléfines.

5. Procédé pour préparer un composé de formule Ia 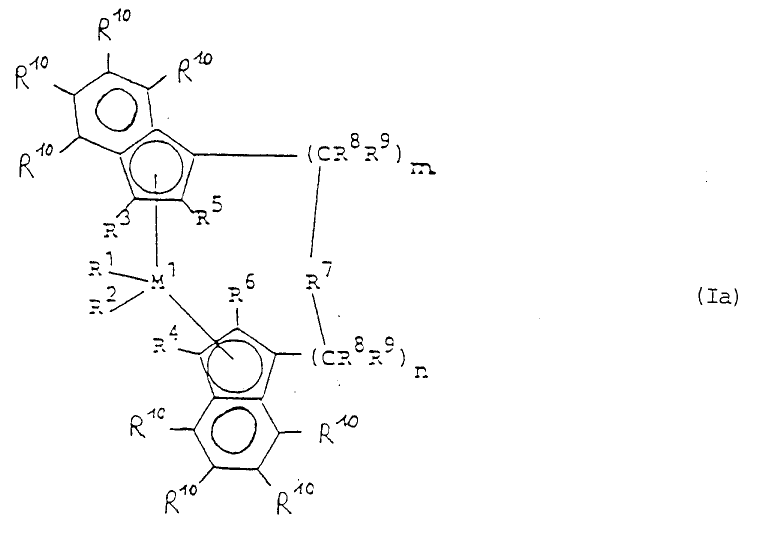 dans laquelle
M¹ est un métal du Groupe IVb, Vb ou VIb du Tableau Périodique,
R¹ et R² sont identiques ou différents et représentent un atome d'hydrogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylakyle en C₇-C₄₀, un groupe alkylaryle en C₇-C₄₀, un groupe arylalcényle en C₈-C₄₀ ou un atome d'halogène,
R³ et R⁴ sont identiques ou différents et représentent un atome d'hydrogène, un atome d'halogène, un groupe alkyle en C₁-C₁₀ pouvant être halogéné, un groupe aryle en C₆-C₁₀, un groupe -NR₂¹⁵, -SR¹⁵, -OSiR₃¹⁵, SiR₃¹⁵ ou -PR₂¹⁵, où R¹⁵ est un atome d'halogène, un groupe alkyle en C₁-C₁₀ ou un groupe aryle en C₆-C₁₀,
R⁵ et R⁶ sont identiques ou différents et ont les significations données pour R³ et R⁴, du moment que R⁵ et R⁶ ne sont pas des hydrogènes,
R⁷ est 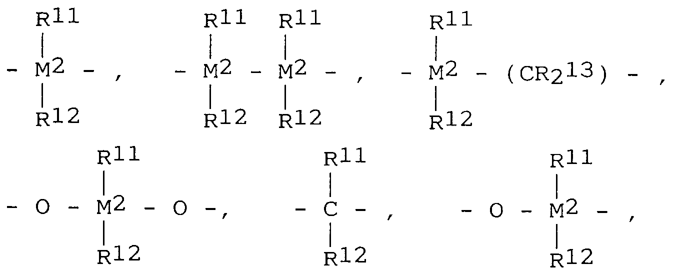 =BR¹¹, =AlR¹¹, -Ge-, -Sn-, -O-, -S-, =SO, =SO₂, =NR¹¹, =CO, =PR¹¹ ou =P(O)R¹¹,
où
R¹¹, R¹² et R¹³ sont identiques ou différents et représentent un atome d'hydrogène, un atome d'halogène, un groupe alkyle en C₁-C₁₀, un groupe fluoralkyle en C₁-C₁₀, un groupe aryle en C₆-C₁₀, un groupe fluoraryle en C₆-C₁₀, un groupe alcoxy en C₁-C₁₀, un groupe alcényle en C₂-C₁₀, un groupe arylakyle en C₇-C₄₀, un groupe arylalcényle en C₈-C₄₀, un groupe alkylaryle en C₇-C₄₀, ou encore R¹⁰ et R¹², ou R¹¹ et R¹³, forment un cycle avec les atomes qui les relient,
M² est le silicium, le germanium ou l'étain,
R⁸ et R⁹ sont identiques ou différents et ont les significations données pour R¹¹,
m et n sont identiques ou différents et valent zéro, 1 ou 2, auquel cas m plus n vaut zéro, 1 ou 2, et
les radicaux R¹⁰ sont identiques ou différents et ont les significations données pour R¹¹, R¹² et R¹³,
caractérisé en ce que
a) on fait réagir un composé de formule II 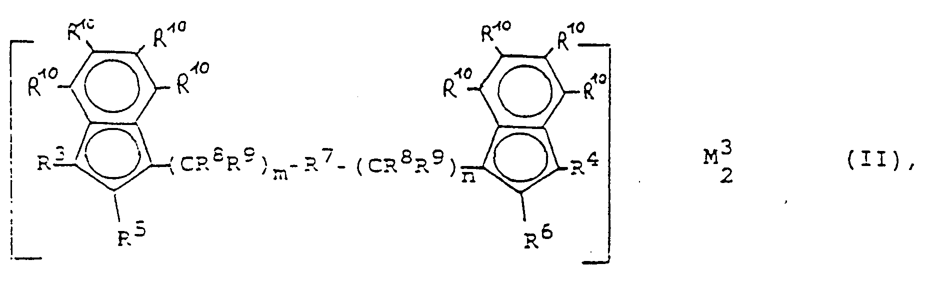 dans laquelle R³-R¹⁰, m et n ont les significations données dans la formule L, et M³ est un métal alcalin, de préférence le lithium, avec un composé de formule III
M¹X₄ (III),
dans laquelle M¹ a les significations données dans la formule I et X est un atome d'halogène, de préférence le chlore, et on convertit éventuellement le produit de réaction ainsi obtenu.

6. Procédé selon la revendication 5, dans lequel les radicaux R¹⁰ sont identiques ou différents et représentent un atome d'hydrogène, un atome d'halogène, un groupe alkyle en C₁-C₁₀, un groupe fluoralkyle en C₁-C₁₀, un groupe aryle en C₆-C₁₀, un groupe fluoraryle en C₆-C₁₀, un groupe alcoxy en C₁-C₁₀, un groupe alcényle en C₂-C₁₀, un groupe arylakyle en C₇-C₄₀, un groupe arylalcényle en C₈-C₄₀, un groupe alkylaryle en C₇-C₄₀, ou encore deux radicaux R¹⁰ forment un cycle avec les atomes qui les relient.
